(19) Europäisches Patentamt
European Patent Office
Office européen des brevets

(11) **EP 3 750 235 B1**

(12) **EUROPÄISCHE PATENTSCHRIFT**

(45) Veröffentlichungstag und Bekanntmachung des Hinweises auf die Patenterteilung:
**20.03.2024 Patentblatt 2024/12**

(21) Anmeldenummer: **19700276.9**

(22) Anmeldetag: **09.01.2019**

(51) Internationale Patentklassifikation (IPC):
*H02M 7/217* (2006.01)    *H02J 7/00* (2006.01)
*H02J 50/00* (2016.01)    *H02M 1/088* (2006.01)
*H02M 3/07* (2006.01)    *H02M 1/00* (2006.01)

(52) Gemeinsame Patentklassifikation (CPC):
**H02M 7/217; H02J 7/34; H02J 50/001;** H02J 50/20;
H02J 2207/20; H02M 1/0006; H02M 1/088;
H02M 3/07

(86) Internationale Anmeldenummer:
**PCT/EP2019/050440**

(87) Internationale Veröffentlichungsnummer:
**WO 2019/154576 (15.08.2019 Gazette 2019/33)**

(54) **VORRICHTUNG ZUR GEWINNUNG ELEKTRISCHER ENERGIE UND ENERGIEERZEUGER MIT EINER DERARTIGEN VORRICHTUNG**

DEVICE FOR OBTAINING ELECTRIC ENERGY AND ENERGY GENERATOR COMPRISING SUCH A DEVICE

DISPOSITIF DE COLLECTE D'ÉNERGIE ÉLECTRIQUE ET GÉNÉRATEUR D'ÉNERGIE POURVU D'UN TEL DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.02.2018 DE 102018201925**

(43) Veröffentlichungstag der Anmeldung:
**16.12.2020 Patentblatt 2020/51**

(73) Patentinhaber: **Würth Elektronik eiSos GmbH & Co. KG**
**74638 Waldenburg (DE)**

(72) Erfinder:
• **SHOUSHA, Mahmoud**
**85386 Eching (DE)**
• **HAUG, Martin**
**81377 München (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
WO-A1-2013/050619    US-A1- 2015 035 512
US-A1- 2017 271 904

• **ROHAN DAYAL ET AL: "Design and Implementation of a Direct AC-DC Boost Converter for Low-Voltage Energy Harvesting", IEEE TRANSACTIONS ON INDUSTRIAL ELECTRONICS, IEEE SERVICE CENTER, PISCATAWAY, NJ, USA, Bd. 58, Nr. 6, 1. Juni 2011 (2011-06-01), Seiten 2387-2396, XP011322242, ISSN: 0278-0046, DOI: 10.1109/TIE.2010.2069074**
• **HSIEH CHEN-YU ET AL: "A simple Bi-directional bridgeless AC/DC buck-boost converter for automotive energy harvesting", IECON 2014 - 40TH ANNUAL CONFERENCE OF THE IEEE INDUSTRIAL ELECTRONICS SOCIETY, IEEE, 29. Oktober 2014 (2014-10-29), Seiten 1937-1943, XP032739028, DOI: 10.1109/IECON.2014.7048767 [gefunden am 2015-02-24]**

- **MD. JAHID HASAN ET AL: "High Efficiency Boost Rectifier (Bridgeless) For Energy Harvesting", INTERNATIONAL JOURNAL OF ADVANCED RESEARCH IN ELECTRICAL ELECTRONICS AND INSTRUMENTATION ENGINEERING, Bd. 03, Nr. 08, 20. Oktober 2014 (2014-10-20), Seiten 12288-12295, XP055578144, ISSN: 2320-3765, DOI: 10.15662/ijareeie.2014.0310041**
- **HAOYU WANG ET AL: "A Bridgeless Boost Rectifier for Low-Voltage Energy Harvesting Applications", IEEE TRANSACTIONS ON POWER ELECTRONICS, INSTITUTE OF ELECTRICAL AND ELECTRONICS ENGINEERS, USA, Bd. 28, Nr. 11, 1. November 2013 (2013-11-01), Seiten 5206-5214, XP011509203, ISSN: 0885-8993, DOI: 10.1109/TPEL.2013.2242903**

**Beschreibung**

Die vorliegende Patentanmeldung nimmt die Priorität der deutschen Patentanmeldung DE 10 2018 201 925.8 in Anspruch.

Die Erfindung betrifft eine Vorrichtung zur Gewinnung elektrischer Energie sowie einen Energieerzeuger mit einer derartigen Vorrichtung.

Energy Harvesting bezeichnet die Gewinnung kleiner Mengen von elektrischer Energie aus Quellen in der Umgebung eines mobilen elektrischen Gerätes, wie beispielsweise aus Vibrationen oder Bewegungen. Entsprechende Energiegewinner (Energy Harvester), wie beispielsweise piezoelektrische Generatoren oder elektromagnetische Energiegewinner, stellen eine geringe Spannung wechselnder Polarität (AC-Spannung) bereit, aus der möglichst effizient elektrische Energie zu gewinnen und nutzbar zu machen ist.

Die Fachartikel "Design and Implementation of a Direct AC-DC Boost Converter for Low-Voltage Energy Harvesting", IEEE TRANSACTIONS ON INDUSTRIAL ELECTRONICS, IEEE SERVICE CENTER, PISCATAWAY, NJ, USA, Bd. 58, Nr. 6, 1. Juni 2011 (2011-06-01), Seiten 2387-2396, "A simple Bi-directional bridgeless AC/DC buck-boost converter for automotive energy harvesting", IECON 2014 - 40th ANNUAL CONFERENCE OF THE IEEE IINDUSTRIAL ELECTRONICS SOCIETY, IEEE, 29. Oktober 2014 (2014-10-29), Seiten 1937-1943, "High Efficiency Boost Rectifier (Bridgeless) For Energy Harvesting", INTERNATIONAL JOURNAL OF ADVANCED RESEARCH IN ELECTRICAL ELECTRONICS AND INSTRUMENTATION ENGINEERING, Bd. 03, Nr. 08, 20. Oktober 2014 (2014-10-20), Seiten 12888-12295, "A Bridgeless Boost Rectifier for Low-Voltage Energy Harvesting Applications", IEEE TRANSACTIONS ON POWER ELECTRONICS, INSTITUTE OF ELECTRICAL AND ELECTONRICS ENGINEERS, USA, Bd. 28, Nr. 11, 1. November 2013 (2013-11-01), Seiten 5206-5214 offenbaren jeweils AC-DC-Wandler mit zwei Ladeschaltungen, die eine gemeinsame Spule verwenden.

Die WO 2013/050619 A1 offenbart einen Spitzenwertdetektor mit einem Komparator, der eine eigene Energieversorgung aufweist.

Die US 2015/0035512 A1 offenbart einen AC-DC-Wandler mit einem Schalter, der mittels einer Steuereinheit ein- und ausgeschaltet wird. Die Steuereinheit wird über eine Ladungspumpe mit Energie versorgt.

Die US 2017/0271904 A1 offenbart eine Schalteinrichtung zum schaltbaren Versorgen einer Last mit elektrischer Energie aus einer AC-Quelle.

Der Erfindung liegt die Aufgabe zugrunde, eine einfach und kompakt aufgebaute Vorrichtung zu schaffen, die in effizienter und zuverlässiger Weise die Gewinnung elektrischer Energie ermöglicht. Die Vorrichtung soll insbesondere eine effiziente Gewinnung elektrischer Energie aus einer äußerst niedrigen Spannung im Millivolt-Bereich ermöglichen.

Diese Aufgabe wird durch eine Vorrichtung mit den Merkmalen des Anspruchs 1 gelöst. Der Gleichrichter weist eine erste Ladeschaltung zur Energiegewinnung aus einer an den Eingangsanschlüssen anliegenden positiven Spannung des Energiegewinners und eine zweite Ladeschaltung zur Energiegewinnung aus einer an den Eingangsanschlüssen anliegenden negativen Spannung des Energiegewinners auf, die eine gemeinsame Spule und einen gemeinsamen elektronischen Schalter aufweisen. Bei Anliegen der positiven Spannung ist der elektronische Schalter in einem ersten Schaltzustand geschlossen, so dass die Spule aufgrund der anliegenden positiven Spannung und des durch die Spule fließenden Stroms Energie speichert. Das erste Sperrelement verhindert in dem ersten Schaltzustand, dass der erste Kondensator geladen wird. Das erste Sperrelement ist insbesondere als Diode ausgebildet. In einem darauffolgenden zweiten Schaltzustand ist der elektronische Schalter geöffnet, so dass mittels der in der Spule gespeicherten Energie der erste Kondensator geladen wird. Das erste Sperrelement lässt in dem zweiten Schaltzustand den Fluss eines Ladestroms von der Spule zu dem ersten Kondensator zu. Bei Anliegen der negativen Spannung ist der elektronische Schalter in einem ersten Schaltzustand geschlossen, so dass die Spule aufgrund der anliegenden negativen Spannung und des durch die Spule fließenden Stroms Energie speichert. Das zweite Sperrelement verhindert in dem ersten Schaltzustand, dass der zweite Kondensator geladen wird. Das zweite Sperrelement ist insbesondere als Diode ausgebildet. In einem darauffolgenden zweiten Schaltzustand ist der elektronische Schalter geöffnet, so dass mittels der in der Spule gespeicherten Energie der zweite Kondensator geladen wird. Das zweite Sperrelement lässt in dem zweiten Schaltzustand den Fluss eines Ladestroms von der Spule zu dem zweiten Kondensator zu.

Dadurch, dass der Gleichrichter nur eine einzige Spule aufweist, die bei Anliegen einer positiven Spannung und bei Anliegen einer negativen Spannung von den Ladeschaltungen gemeinsam genutzt wird, ist der Gleichrichter einfach und kompakt aufgebaut. Die Kosten der Vorrichtung hängen wesentlich von dem magnetischen Volumen ab, das von der gemeinsamen Spule definiert ist. Dadurch, dass der Gleichrichter genau eine Spule aufweist, ist das magnetische Volumen auf das Volumen der einzigen Spule begrenzt, so dass die Kosten der Vorrichtung vergleichsweise gering sind. Darüber hinaus wird die anliegende alternierende Spannung (AC-Spannung) in einem einzigen Schritt in eine Spannung gleicher Polarität bzw. in eine Gleichspannung (DC-Spannung) gewandelt, so dass die Gewinnung elektrischer Energie effizient und zuverlässig erfolgt. Die Eingangsanschlüsse sind nicht unmittelbar mit einer Diode des Gleichrichters verbunden, so dass in einfacher und effizienter Weise auch eine von dem Energiegewinner bereitgestellte äußerst niedrige Spannung gleichgerichtet und nutzbar gemacht werden kann. Der Gleichrichter ist insbesondere als Tief-Hochsetzsteller ausgebildet (Buck-Boost-Converter).

Der elektronische Schalter wird von den Ladeschaltungen gemeinsam und in entsprechender Weise genutzt. Der elektronische Schalter weist mindestens ein elektronisches Schaltelement auf. Das mindestens eine elektronische Schaltelement ist insbesondere als MOSFET ausgebildet, vorzugsweise als selbstsperrender n-Kanal-MOSFET. Der erste Schaltzustand und der nachfolgende zweite Schaltzustand erstrecken sich zeitlich über eine Periodendauer Ts. Für die Periodendauer Ts gilt: Ts = 1/fs, wobei fs eine Schaltfrequenz der Steuereinrichtung bezeichnet. Der jeweilige erste Schaltzustand hat eine Zeitdauer D · Ts und der jeweils zugehörige zweite Schaltzustand eine Zeitdauer (1 - D) · Ts, wobei D einen Tastgrad bzw. Ansteuergrad (Duty cycle) bezeichnet.

Die Sperrelemente haben in Bezug auf die Spule insbesondere unterschiedliche Durchlassrichtungen. Dadurch, dass das erste Sperrelement und das zweite Sperrelement in Bezug auf die Spule unterschiedliche Durchlassrichtungen bzw. unterschiedliche Sperrrichtungen haben, ist der Gleichrichter in einfacher Weise zwischen der ersten Ladeschaltung und der zweiten Ladeschaltung umschaltbar. Durch die Sperrelemente erfolgt bei geöffnetem elektronischen Schalter ein Stromfluss entweder über eine erste Masche, die die Spule, das erste Sperrelement und den ersten Kondensator umfasst, oder über eine zweite Masche, die die Spule, das zweite Sperrelement und den zweiten Kondensator umfasst. Die Sperrelemente sind vorzugsweise als Dioden ausgebildet. Das erste Sperrelement ist insbesondere mit dem ersten Eingangsanschluss und dem ersten Ausgangsanschluss verbunden und ermöglicht einen Stromfluss von der Spule zu dem ersten Kondensator. Das zweite Sperrelement ist insbesondere mit dem ersten Eingangsanschluss und dem zweiten Ausgangsanschluss verbunden und ermöglicht einen Stromfluss von der Spule zu dem zweiten Kondensator.

Der Energiegewinner wird an die Eingangsanschlüsse angeschlossen und stellt an diesen eine Spannung bzw. Eingangsspannung bereit. An den Ausgangsanschlüssen wird die Ausgangsspannung bereitgestellt, mit der ein Verbraucher bzw. eine Last betreibbar ist. Der zentrale Ladeschaltungsknoten, an dem die genau eine bzw. die einzige Spule, der elektronische Schalter und die Kondensatoren angeschlossen sind, ermöglicht in einfacher Weise in einem ersten Schaltzustand das Speichern von elektrischer Energie in der Spule und in einem darauffolgenden zweiten Schaltzustand das Laden einer der Kondensatoren mit der in der Spule gespeicherten elektrischen Energie. Das Umschalten zwischen den Schaltzuständen erfolgt mittels des elektronischen Schalters. Die Auswahl zwischen der ersten Ladeschaltung bei Anliegen einer positiven Spannung und der zweiten Ladeschaltung bei Anliegen einer negativen Spannung erfolgt mittels der Sperrelemente. Die Auswahl erfolgt insbesondere automatisch bei einer Ausbildung der Sperrelemente als Dioden. Der erste Kondensator wird bei Anliegen einer positiven Spannung an den Eingangsanschlüssen und der zweite Kondensator bei Anliegen einer negativen Spannung an den Eingangsanschlüssen geladen, so dass an den Ausgangsanschlüssen eine vergleichsweise hohe Ausgangsspannung bereitgestellt wird, selbst wenn die an den Eingangsanschlüssen anliegende Spannung äußerst gering ist.

Mittels der Versorgungsschaltung wird der Steuerschaltung in zuverlässiger Weise eine Versorgungsspannung bereitgestellt. Die Versorgungsschaltung ist insbesondere derart ausgestaltet, dass die Versorgungsspannung möglichst konstant ist. Die Versorgungsschaltung ist vorzugsweise an einen der Ausgangsanschlüsse angeschlossen und mit dem elektronischen Schalter verbunden. Die Versorgungsschaltung ist insbesondere an den zweiten Ausgangsanschluss angeschlossen und mit einer Verbindung von zwei elektronischen Schaltelementen des elektronischen Schalters verbunden. Der hierdurch ausgebildete Knoten dient als Referenzknoten und stellt für die Steuerschaltung ein Referenzpotenzial bereit. Die Versorgungsspannung dient als Eingangsspannung für die Steuerschaltung. Die Steuerschaltung ist derart ausgebildet, dass ein sogenanntes Maximum-Power-Point-Tracking (MPPT) erfolgt, so dass die Energiegewinnung optimiert bzw. maximiert wird. Hierzu passt die Steuerschaltung einen Tastgrad D derart an, dass eine Eingangsimpedanz an den Eingangsanschlüssen im Wesentlichen einem Innenwiderstand des Energiegewinners entspricht und die Eingangsimpedanz im Wesentlichen rein ohmsch wird, so dass die Spannung an den Eingangsanschlüssen und der zugehörige Strom im Wesentlichen in Phase sind.

Die mindestens eine Ladungspumpe bildet die Versorgungsschaltung, die zur Bereitstellung der Versorgungsspannung für die Steuerschaltung dient. Vorzugsweise weist die Steuereinrichtung genau eine Ladungspumpe auf, wenn der Gleichrichter einen galvanischen Energiespeicher umfasst. Die Ladungspumpe ist insbesondere einstufig ausgebildet. Vorzugsweise weist die Steuereinrichtung genau zwei Ladungspumpen auf, wenn der Gleichrichter keinen galvanischen Energiespeicher umfasst. Die genau zwei Ladungspumpen sind insbesondere als Hilfs-Ladungspumpe und als Haupt-Ladungspumpe ausgebildet, wobei die Hilfs-Ladungspumpe zur Inbetriebnahme der Haupt-Ladungspumpe dient.

Die Hilfs-Ladungspumpe dient zur Inbetriebnahme der Haupt-Ladungspumpe, die eine Versorgungsspannung für die Ansteuerung des elektronischen Schalters bereitstellt. Die Hilfs-Ladungspumpe ist insbesondere als passive einstufige Villard-Ladungspumpe ausgebildet. Die Haupt-Ladungspumpe ist vorzugsweise einstufig ausgebildet und umfasst eine Reihenschaltung aus einer Diode und einem Kondensator. Die Hilfs-Ladungspumpe ist derart mit der Haupt-Ladungspumpe verbunden, dass mittels der Hilfs-Ladungspumpe der Kondensator der Haupt-Ladungspumpe geladen wird.

Die Hilfs-Ladungspumpe ermöglicht eine zuverlässige Inbetriebnahme der Steuereinrichtung und ein zuverlässiges Erzeugen von Steuersignalen für die Ansteuerung des elektronischen Schalters. Die Hilfs-Ladungspumpe ermöglicht die Inbetriebnahme der Haupt-Ladungspumpe und das Bereitstellen einer Versorgungsspannung. Die Hilfs-Ladungspumpe ist insbesondere dann vorteilhaft, wenn der Gleichrichter keinen galvanischen Energiespeicher aufweist.

Die Ladungspumpe ist insbesondere einstufig ausgebildet. Vorzugsweise weist die Ladungspumpe genau eine Diode und genau einen Kondensator auf. Vorzugsweise ist die Diode mit dem zweiten Ausgangsanschluss und dem Kondensator verbunden und der Kondensator mit einem Referenzknoten verbunden, der zwischen zwei elektronischen Schaltelementen des elektronischen Schalters ausgebildet ist. Der Referenzknoten weist insbesondere ein Referenzpotenzial für eine Steuerschaltung auf. Die Diode ermöglicht einen Stromfluss von dem zweiten Ausgangsanschluss zu dem Referenzknoten. Die Ladungspumpe bildet insbesondere eine Haupt-Ladungspumpe, wenn der Gleichrichter keinen galvanischen Energiespeicher aufweist.

Die Ladungspumpe ist als passive einstufige Villard-Ladungspumpe ausgebildet. Die Ladungspumpe bildet eine Hilfs-Ladungspumpe, die mit einer Haupt-Ladungspumpe verbunden ist. Hierzu ist die vierte Diode an die Verbindung zwischen einer ersten Diode und einem dritten Kondensator, also an einen ersten Knoten, angeschlossen. Bei Anliegen einer negativen Spannung wird über die zweite Diode der vierte Kondensator geladen. Hierzu ermöglicht die zweite Diode einen Stromfluss von dem zweiten Eingangsanschluss zu dem ersten Eingangsanschluss. Bei Anliegen einer positiven Spannung an den Eingangsanschlüssen wird der vierte Kondensator über die dritte Diode entladen und der fünfte Kondensator geladen. Hierzu ermöglicht die dritte Diode einen Stromfluss von dem zweiten Knoten zu dem dritten Knoten. Durch das Laden des fünften Kondensators ist die Spannung an dem dritten Knoten im Wesentlichen gleich der zweifachen maximalen Spannung an den Eingangsanschlüssen. Über die vierte Diode wird der dritte Kondensator der Haupt-Ladungspumpe geladen, so dass der dritte Kondensator eine Versorgungsspannung bereitstellt. Hierzu ermöglicht die vierte Diode einen Stromfluss von dem fünften Kondensator zu dem dritten Kondensator.

Die Ladungspumpe, die Spule, einer der Kondensatoren und eine Inversdiode eines der elektronischen Schaltelemente bilden zusammen mit einem an die Eingangsanschlüsse angeschlossenen Energiegewinner eine Masche aus, die eine Inbetriebnahme der Ladungspumpe ermöglicht, wenn an den Eingangsanschlüssen eine Spannung anliegt. Durch die Inbetriebnahme der Ladungspumpe wird eine Versorgungsspannung bereitgestellt, die ein Ansteuern des elektronischen Schalters bzw. der elektronischen Schaltelemente ermöglicht. Hierdurch kann die Vorrichtung in einfacher und zuverlässiger Weise in Betrieb genommen werden. Der Knoten bildet einen Referenzknoten, der für eine Steuerschaltung zur Erzeugung von Steuersignalen ein Referenzpotenzial aufweist. Vorzugsweise ist die Ladungspumpe mit dem zweiten Ausgangsanschluss verbunden und der elektronische Schalter mit der Spule und dem zweiten Eingangsanschluss verbunden. Weist der Gleichrichter keinen galvanischen Energiespeicher auf, bildet die Ladungspumpe eine Haupt-Ladungspumpe.

Die Spule und der elektronische Schalter sind insbesondere in Reihe geschaltet. Dies gewährleistet einen einfachen und kompakten Aufbau und eine effiziente Energiegewinnung. Die Reihenschaltung aus der Spule und dem elektronischen Schalter ist mit den Eingangsanschlüssen verbunden. Ist der elektronische Schalter geschlossen, so bildet die Reihenschaltung aus der Spule und dem elektronischen Schalter zusammen mit einem an den Eingangsanschlüssen angeschlossenen Energiegewinner eine Masche aus. Hierdurch fließt aufgrund der an den Eingangsanschlüssen anliegenden Spannung ein Strom durch die Spule, so dass mittels der Spule Energie gespeichert wird. In dem nachfolgenden zweiten Schaltzustand ist der elektronische Schalter geöffnet, so dass aufgrund der Reihenschaltung die Verbindung der Spule zu einem der Eingangsanschlüsse getrennt und die Masche somit unterbrochen ist. Hierdurch wird in dem zweiten Schaltzustand ein Laden des ersten Kondensators bzw. des zweiten Kondensators ermöglicht. Vorzugsweise ist die Spule mit dem ersten Eingangsanschluss und dem elektronischen Schalter verbunden und der elektronische Schalter mit dem zweiten Eingangsanschluss verbunden. Dadurch, dass zwei elektronische Schaltelemente in Reihe geschaltet sind, werden parasitäre Ströme und hierdurch verursachte Verluste vermieden. Die zwei elektronischen Schaltelemente weisen insbesondere eine Back-to-Back-Anordnung auf. Hierdurch werden Verluste und eine Fehlfunktion in Folge von parasitären Strömen vermieden. Parasitäre Ströme werden insbesondere durch Inversdioden (Body-Dioden) verursacht. Aufgrund der Back-to-Back-Anordnung weisen die Inversdioden unterschiedliche Sperrrichtungen auf. Die elektronischen Schaltelemente sind ausgewählt aus der Gruppe Feldeffekttransistor (n-Kanal oder p-Kanal) und Bipolartransistor (MPM oder PMP). Die elektronischen Schaltelemente sind vorzugsweise als MOSFETs ausgebildet, insbesondere als n-Kanal-MOSFETs.

Der Gleichrichter umfasst insbesondere einen galvanischen Energiespeicher, der mit den Ausgangsanschlüssen verbunden ist. Dies gewährleistet eine effiziente und zuverlässige Energiegewinnung. Der galvanische Energiespeicher wird mittels der Kondensatoren geladen und speichert die gewonnene elektrische Energie. Mittels des galvanischen Energiespeichers stellt die Vorrichtung somit an den Ausgangsanschlüssen eine Ausgangspannung bereit, auch wenn die Kondensatoren nicht geladen sind. Zudem wird mittels des galvanischen Energiespeichers die Ausgangsspannung stabilisiert. Der galvanische Energiespeicher ist vorzugsweise mit den Ausgangsanschlüssen verbunden. Dadurch, dass von einem Verbraucher bzw. einer Last nicht benötigte elektrische Energie in dem galvanischen Energiespeicher gespeichert bzw. zwischengespeichert wird, wird die gewonnene Energie in einfacher und effizienter Weise genutzt.

An den Ausgangsanschlüssen ist insbesondere ein Spannungsregler angeschlossen. Dies gewährleistet eine zuverlässige Energiegewinnung. Dadurch, dass an den Ausgangsanschlüssen ein Spannungsregler angeschlossen ist, wird einem Verbraucher bzw. einer Last eine vergleichsweise konstante Spannung bereitgestellt. Der Spannungsregler ist insbesondere dann vorteilhaft, wenn an den Ausgangsanschlüssen kein galvanischer Energiespeicher angeschlossen ist. Da die Ausgangsspannung an den Ausgangsanschlüssen aufgrund des sich verändernden Ladezustands der Kondensatoren schwankt, ist der Spannungsregler zur Stabilisierung der Ausgangsspannung vorteilhaft. Der Spannungsregler umfasst insbesondere einen Gleichspannungswandler (DC-DC-Wandler), dessen ausgangsseitige Spannung geregelt wird. Hierzu ist der Gleichspannungswandler Teil eines Spannungsregelkreises, der die ausgangsseitige Spannung mit einer Soll-Spannung vergleicht und eine Spannungsabweichung zwischen der Soll-Spannung und der ausgangsseitigen Spannung einem Regler zuführt, der den Gleichspannungswandler zur Ausregelung der Spannungsabweichung ansteuert. Der Regler ist beispielsweise als PID-Regler ausgebildet.

Eine Vorrichtung nach Anspruch 2 gewährleistet einen einfachen Aufbau und eine hohe Zuverlässigkeit. Der elektronische Schalter weist mindestens ein elektronisches Schaltelement mit einer zugehörigen parasitären Inversdiode auf. Die parasitäre Inversdiode wird bei der Inbetriebnahme des Gleichrichters dazu genutzt, die Steuereinrichtung mit elektrischer Energie zu versorgen. Eine Versorgungsschaltung der Steuereinrichtung ist hierzu an den Gleichrichter angeschlossen, so dass die Spule, einer der Kondensatoren, die Versorgungsschaltung und die parasitäre Inversdiode zusammen mit dem an den Eingangsanschlüssen angeschlossenen Energiegewinner eine Masche ausbilden. Über diese Masche, also über die parasitäre Inversdiode, wird die Versorgungsschaltung mittels der an den Eingangsanschlüssen anliegenden Spannung und/oder der Spannung eines galvanischen Energiespeichers geladen, so dass zur Erzeugung der Steuersignale eine Versorgungsspannung durch die Versorgungsschaltung bereitgestellt wird. Die Versorgungsschaltung ist insbesondere mit einem der Ausgangsanschlüsse und einem Anschluss des elektronischen Schaltelements verbunden. Vorzugsweise ist die Versorgungsschaltung mit dem zweiten Ausgangsanschluss und einem Source-Anschluss des als MOSFET ausgebildeten elektronischen Schaltelements verbunden. Ein Drain-Anschluss des elektronischen Schaltelements ist vorzugsweise mit dem zweiten Eingangsanschluss verbunden.

Eine Vorrichtung nach Anspruch 3 gewährleistet eine hohe Zuverlässigkeit und eine hohe Effizienz. Die elektronischen Schaltelemente sind in Reihe geschaltet und weisen eine Back-to-Back-Anordnung auf, so dass die parasitären Inversdioden entgegengesetzte Sperrrichtungen haben. Durch die Anordnung der Schaltelemente ist somit gewährleistet, dass sowohl bei einer anliegenden negativen Spannung als auch bei einer anliegenden positiven Spannung mindestens eine der Inversdioden sperrt. Parasitäre Ströme und hierdurch verursachte Verluste werden somit vermieden. Vorzugsweise bildet die Verbindung zwischen den in Reihe geschalteten elektronischen Schaltelementen ein Referenzpotenzial (Ground) der Steuereinrichtung aus, so dass die elektronischen Schaltelemente aufgrund des definierten Referenzpotenzials einfach ansteuerbar sind. Die elektronischen Schaltelemente sind vorzugsweise als MOSFETs ausgebildet, die mit den Source-Anschlüssen verbunden und auf diese Weise in Reihe geschaltet sind. Die Source-Anschlüsse sind vorzugsweise mit einer Versorgungsschaltung der Steuereinrichtung verbunden, wobei der hierdurch ausgebildete Knoten einen Referenzknoten bildet und an das Referenzpotenzial (Ground) angeschlossen ist. Die Reihenschaltung der elektronischen Schaltelemente ist insbesondere mit der Spule und dem zweiten Eingangsanschluss verbunden. Die Inversdiode des an den zweiten Eingangsanschluss angeschlossenen elektronischen Schaltelements hat insbesondere eine Durchlassrichtung, die zu dem zweiten Eingangsanschluss gerichtet ist.

Eine Vorrichtung nach Anspruch 4 gewährleistet einen einfachen und kompakten Aufbau und eine effiziente Energiegewinnung. Bei Anliegen einer positiven Spannung an den Eingangsanschlüssen bilden die Spule, der erste Kondensator und das erste Sperrelement in einem zweite Schaltzustand eine erste Masche aus, so dass die in einem ersten Schaltzustand in der Spule gespeicherte Energie von der Spule zu dem ersten Kondensator übertragen wird. Das erste Sperrelement ermöglicht in dem zweiten Schaltzustand einen Stromfluss von der Spule zu dem ersten Kondensator.

Eine Vorrichtung nach Anspruch 5 gewährleistet einen einfachen und kompakten Aufbau und eine effiziente Energiegewinnung. Bei Anliegen einer negativen Spannung an den Eingangsanschlüssen bilden die Spule, der zweite Kondensator und das zweite Sperrelement in einem zweiten Schaltzustand eine zweite Masche aus, so dass die in einem ersten Schaltzustand in der Spule gespeicherte Energie von der Spule zu dem zweiten Kondensator übertragen wird. Das zweite Sperrelement ermöglicht in dem zweiten Schaltzustand einen Stromfluss von der Spule zu dem zweiten Kondensator.

Eine Vorrichtung nach Anspruch 6 gewährleistet einen einfachen Aufbau und eine zuverlässige Energiegewinnung. Der ohmsche Widerstand vereinfacht die Inbetriebnahme der Versorgungsschaltung und somit das Bereitstellen einer Versorgungsspannung für die Ansteuerung des elektronischen Schalters mittels der Steuerschaltung. Die Versorgungsschaltung ist an den zweiten Ausgangsanschluss angeschlossen, so dass bei der Inbetriebnahme der Versorgungsschaltung der zweite Kondensator geladen wird. Weist der Gleichrichter einen galvanischen Energiespeicher auf, so liegt die Spannung des galvanischen Energiespeichers hauptsächlich über dem ersten Kondensator an, wohingegen die Spannung über dem zweiten Kondensator niedrig ist. Durch den ohmschen Widerstand wird der Unterschied zwischen den Spannungen an dem ersten Kondensator und an dem zweiten Kondensator reduziert, so dass die Versorgungsschaltung und die Steuerschaltung sicher in Betrieb genommen werden können. Zur Vermeidung von Verlusten wird der ohmsche Widerstand vorzugsweise hochohmig gewählt.

Eine Vorrichtung nach Anspruch 7 gewährleistet eine effiziente und zuverlässige Energiegewinnung bei Anliegen einer positiven Spannung an den Eingangsanschlüssen. Die elektronischen Schaltelemente dienen zum Umschalten zwischen dem ersten Schaltzustand und dem nachfolgenden zweiten Schaltzustand. In dem ersten Schaltzustand wird mittels der an den Eingangsanschlüssen anliegenden positiven Spannung elektrische Energie in der Spule gespeichert. Hierzu sind die elektronischen Schaltelemente in dem ersten Schaltzustand geschlossen. In dem nachfolgenden zweiten Schaltzustand wird mittels der gespeicherten elektrischen Energie der erste Kondensator geladen. Die elektrischen Schaltelemente werden synchron angesteuert. Die erste Schaltfolge erstreckt sich über eine Periodendauer Ts. Für die Periodendauer Ts gilt: Ts = 1/fs, wobei fs eine Schaltfrequenz der Steuereinrichtung bezeichnet. Der erste Schaltzustand hat eine Zeitdauer $D \cdot T_S$ und der zweite Schaltzustand eine Zeitdauer $(1 - D) \cdot T_S$, wobei D einen Tastgrad bzw. Ansteuergrad (Duty cycle) bezeichnet. Mittels des Tastgrades D wird vorzugsweise eine Eingangsimpedanz an den Eingangsanschlüssen eingestellt. Der Tastgrad D bezeichnet das Verhältnis der Dauer des ersten Schaltzustands zu der Gesamtdauer der Schaltzustände, also zu der Periodendauer Ts.

Eine Vorrichtung nach Anspruch 8 gewährleistet eine effiziente und zuverlässige Energiegewinnung bei Anliegen einer negativen Spannung an den Eingangsanschlüssen. Die elektronischen Schaltelemente dienen zum Umschalten zwischen dem ersten Schaltzustand und dem nachfolgenden zweiten Schaltzustand. In dem ersten Schaltzustand wird mittels der an den Eingangsanschlüssen anliegenden negativen Spannung elektrische Energie in der Spule gespeichert. Hierzu sind die elektronischen Schaltelemente in dem ersten Schaltzustand geschlossen. In dem nachfolgenden zweiten Schaltzustand wird mittels der gespeicherten elektrischen Energie der zweite Kondensator geladen. Die elektrischen Schaltelemente werden synchron angesteuert. Die erste Schaltfolge erstreckt sich über eine Periodendauer Ts. Für die Periodendauer Ts gilt: Ts = 1/fs, wobei fs eine Schaltfrequenz der Steuereinrichtung bezeichnet. Der erste Schaltzustand hat eine Zeitdauer $D \cdot T_S$ und der zweite Schaltzustand eine Zeitdauer $(1 - D) \cdot T_S$, wobei D einen Tastgrad bzw. Ansteuergrad (Duty cycle) bezeichnet. Mittels des Tastgrades D wird vorzugsweise eine Eingangsimpedanz an den Eingangsanschlüssen eingestellt. Der Tastgrad D bezeichnet das Verhältnis der Dauer des ersten Schaltzustands zu der Gesamtdauer der Schaltzustände, also zu der Periodendauer Ts.

Eine Vorrichtung nach Anspruch 9 gewährleistet eine zuverlässige und effiziente Energiegewinnung. Die Steuerschaltung ermöglicht in einfacher Weise ein sogenanntes Maximum-Power-Point-Tracking (MPPT) und somit eine Optimierung bzw. Maximierung der gewonnenen elektrischen Energie. Durch die Komparatoren wird eine gesteuerte Pulsweitenmodulation (Open-Loop-Pulse-Width-Modulation) realisiert. Der erste Komparator und/oder der zweite Komparator werden mit der Versorgungsspannung betrieben, die von der Versorgungsschaltung bereitgestellt wird. Die Erzeugung der Sägezahnspannung sowie die Erzeugung der Steuersignale mittels der Sägezahnspannung ist durch die geeignete Auswahl der ohmschen Widerstände und/oder des Kondensators der Komparatoren in einfacher Weise so anpassbar, dass eine Eingangsimpedanz im Wesentlichen dem Innenwiderstand des Energiegewinners entspricht. Die Eingangsimpedanz an den Eingangsanschlüssen ist mittels eines Tastgrades D (Duty cycle) anpassbar. Der Tastgrad D bezeichnet das Verhältnis der Dauer eines ersten Schalzustands zu der Gesamtdauer der Schaltzustände, also zu einer Periodendauer Ts. Der zweite Komparator vergleicht die Sägezahnspannung insbesondere mit einer Vergleichsspannung, die von einem Spannungsteiler bereitgestellt wird, an dem die Versorgungsspannung anliegt. Der Spannungsteiler ist vorzugsweise rein ohmsch ausgebildet und umfasst zwei ohmsche Widerstände.

Eine Vorrichtung nach Anspruch 10 gewährleistet eine effiziente Energiegewinnung. Die Eingangsimpedanz wird an eine Impedanz bzw. Innenwiderstand des Energiegewinners angepasst, so dass die gewonnene elektrische Energie optimiert bzw. maximiert wird. Anders ausgedrückt, wird die Eingangsimpedanz derart angepasst, dass die an den Eingangsanschlüssen anliegende Spannung und der zugehörige Strom im Wesentlichen in Phase sind. Hierdurch erfolgt ein Maximum-Power-Point-Tracking (MPPT). Die Eingangsimpedanz wird mittels eines Tastgrades D (Duty cycle) eingestellt. Der Tastgrad D bezeichnet das Verhältnis der Dauer eines ersten Schaltzustands zu der Gesamtdauer eines ersten Schaltzustands und eines nachfolgenden zweiten Schaltzustands, also zu einer Periodendauer Ts.

Der Erfindung liegt ferner die Aufgabe zugrunde, einen einfach und kompakt aufgebauten Energieerzeuger zu schaffen, der in effizienter und zuverlässiger Weise die Gewinnung elektrischer Energie ermöglicht. Der Energieerzeuger soll insbesondere eine effiziente Gewinnung elektrischer Energie aus einer äußerst niedrigen Spannung im Millivolt-Bereich ermöglichen.

Diese Aufgabe wird durch einen Energieerzeuger mit den Merkmalen des Anspruchs 11 gelöst. Die Vorteile des Energieerzeugers entsprechen den bereits beschriebenen Vorteilen der erfindungsgemäßen Vorrichtung zur Gewinnung elektrischer Energie. Der Energiegewinner ist beispielsweise ein piezoelektrischer Energiegewinner bzw. piezoelektrischer Generator und/oder ein elektromagnetischer Energiegewinner. Vorzugsweise ist der Energiegewinner ein elektromagnetischer Energiegewinner (EMEH: Electro-Magnetic Enerergy Harvester). Elektromagnetische Energiegewinner stellen eine vergleichsweise hohe Menge an elektrischer Energie bereit. Die vergleichsweise geringe Spannung von elektromagnetischen Energiegewinnern stellt für die erfindungsgemäße Vorrichtung keinen Nachteil dar.

Weitere Merkmale, Vorteile und Einzelheiten der Erfindung ergeben sich aus der nachfolgenden Beschreibung mehrerer Ausführungsbeispiele. Es zeigen:

Fig. 1    eine schematische Darstellung eines Energieerzeugers gemäß einem ersten nicht erfindungsgemäßen Ausführungsbeispiel mit einem galvanischen Energiespeicher,

Fig. 2    einen zeitlichen Verlauf einer von dem Energiegewinner bereitgestellten Spannung sowie der von einer Steuereinrichtung erzeugten Steuersignale zum Umschalten zwischen ersten Schaltzuständen und zweiten Schaltzuständen des Energieerzeugers,

Fig. 3    eine schematische Darstellung einer Steuerschaltung zur Erzeugung der Steuersignale für einen elektronischen Schalters des Energieerzeugers,

Fig. 4    ein Ersatzschaltbild des Energieerzeugers bei der Inbetriebnahme einer Versorgungsschaltung zur Bereitstellung einer Versorgungsspannung für die Steuerschaltung,

Fig. 5    ein Ersatzschaltbild des Energieerzeugers in einem ersten Schaltzustand, wenn ein Energiegewinner eine positive Spannung bereitstellt,

Fig. 6    ein Ersatzschaltbild des Energiegewinners in einem zweiten Schaltzustand, der auf den ersten Schaltzustand gemäß Fig. 5 folgt,

Fig. 7    ein Ersatzschaltbild des Energieerzeugers in einem ersten Schaltzustand, wenn ein Energiegewinner eine negative Spannung bereitstellt,

Fig. 8    ein Ersatzschaltbild des Energiegewinners in einem zweiten Schaltzustand, der auf den ersten Schaltzustand gemäß Fig. 7 folgt,

Fig. 9    eine schematische Darstellung eines Energieerzeugers gemäß einem zweiten Ausführungsbeispiel ohne einen galvanischen Energiespeicher,

Fig. 10   ein Schaltbild einer Versorgungsschaltung der Steuereinrichtung des Energieerzeugers gemäß Fig. 9 in einem ersten Ladezustand,

Fig. 11   ein Schaltbild der Versorgungsschaltung in einem zweiten Ladezustand, und

Fig. 12   ein Schaltbild der Versorgungsschaltung in einem dritten Ladezustand.

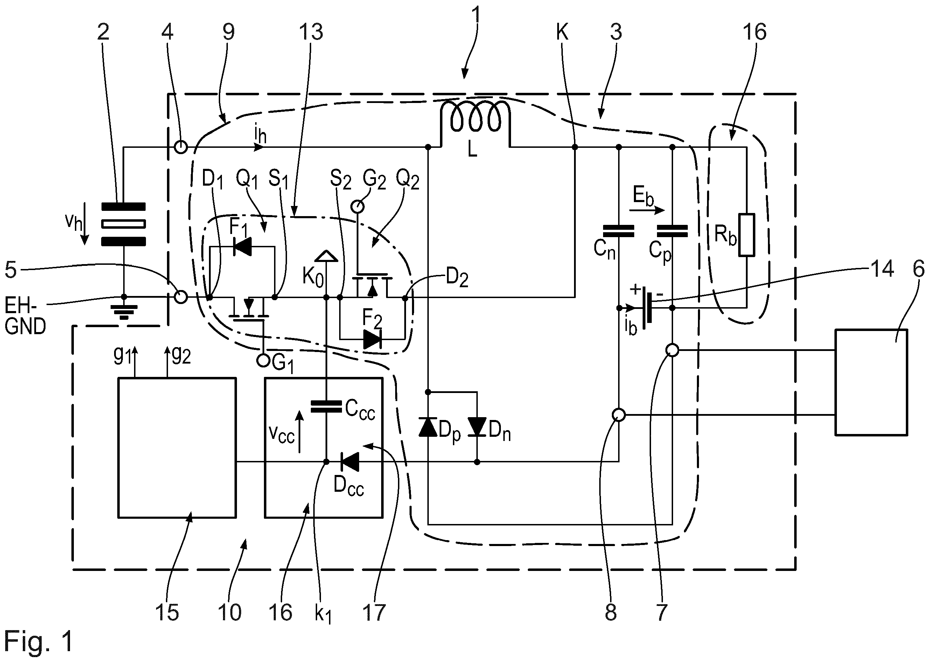

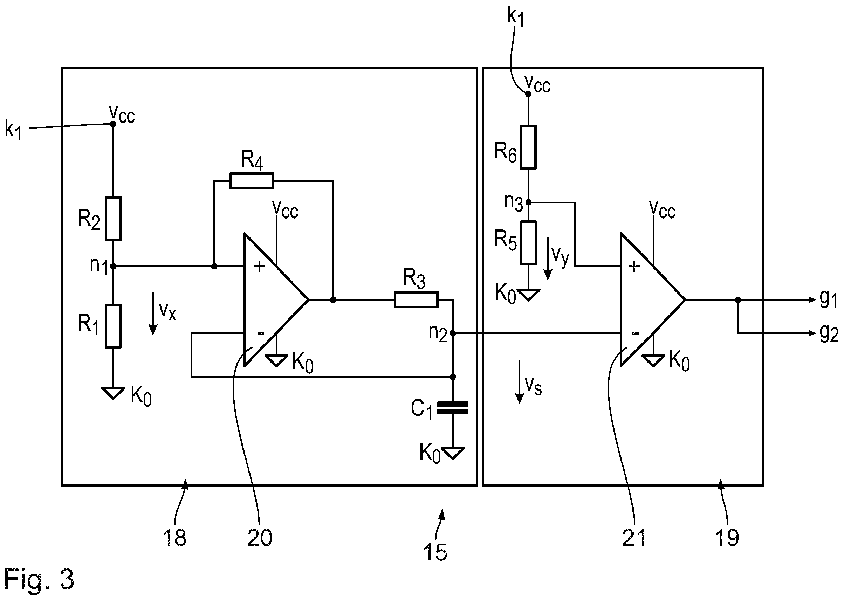

Nachfolgend ist anhand der Fig. 1 bis 8 ein erstes Ausführungsbeispiel beschrieben. Ein Energieerzeuger 1 umfasst einen Energiegewinner 2 und eine Vorrichtung 3 zur Gewinnung elektrischer Energie. Der Energiegewinner 2 ist elektromagnetisch ausgebildet. Der Energiegewinner 2 ist bekannt und in üblicher Weise aufgebaut. Der Energiegewinner 2 wird auch als Energy Harvester bezeichnet. Die Vorrichtung 3 dient zur Nutzbarmachung bzw. Gewinnung der elektrischen Energie, die von dem Energiegewinner 2 bereitgestellt wird. Hierzu ist der Energiegewinner 2 an einen ersten Eingangsanschluss 4 und einen zweiten Eingangsanschluss 5 der Vorrichtung 3 angeschlossen. Der Energieerzeuger 1 dient zur Versorgung einer Last 6 mit elektrischer Energie. Hierzu ist die Last 6 an einen ersten Ausgangsanschluss 7 und an einen zweiten Ausgangsanschluss 8 der Vorrichtung 3 angeschlossen. Der Energiegewinner 2 ist an dem Eingangsanschluss 5 mit einem Referenzpotenzial verbunden, das als EH-GND (Energy Harvester GND) bezeichnet ist.

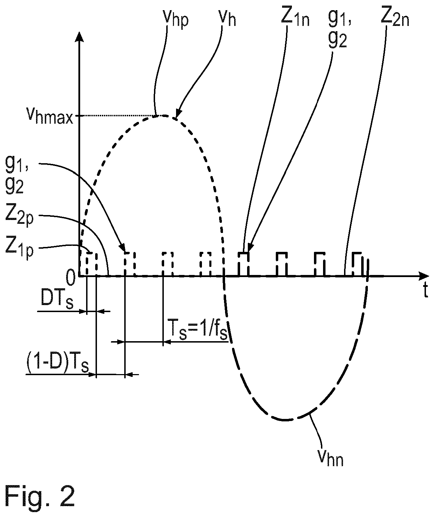

Der Energiegewinner 2 stellt eine Spannung $v_h$ bereit, die eine wechselnde Polarität hat (AC-Spannung). Die Spannung $v_h$ über der Zeit t ist beispielhaft in Fig. 2 dargestellt. Der Teil der Spannung $v_h$ mit positiver Polarität wird nachfolgend mit $v_{hp}$ und der Teil der Spannung mit negativer Polarität mit $v_{hn}$ bezeichnet.

Die Vorrichtung 3 umfasst einen Gleichrichter 9 und eine zugehörige Steuereinrichtung 10. Der Gleichrichter 9 bildet eine erste Ladeschaltung 11 aus, die zur Energiegewinnung aus der an den Eingangsanschlüssen 4, 5 anliegenden positiven Spannung $v_{hp}$ des Energiegewinners 2 dient. Weiterhin bildet der Gleichrichter 9 eine zweite Ladeschaltung 12 aus, die zur Energiegewinnung aus der an den Eingangsanschlüssen 4, 5 anliegenden negativen Spannung $v_{hn}$ des Energiegewinners 2 dient.

Die erste Ladeschaltung 11 umfasst einen elektronischen Schalter 13, eine Spule L, einen ersten Kondensator $C_p$ und ein erstes Sperrelement $D_p$. Demgegenüber umfasst die zweite Ladeschaltung 12 den elektronischen Schalter 13, die Spule L, einen zweiten Kondensator $C_n$ und ein zweites Sperrelement $D_n$.

Die Spule L ist mit dem ersten Eingangsanschluss 4 und einem Ladeschaltungsknoten K verbunden. Der elektronische Schalter 13 ist mit dem Ladeschaltungsknoten K und dem zweiten Eingangsanschluss 5 verbunden, so dass die Spule L und der elektronische Schalter 13 zwischen den Eingangsanschlüssen 4, 5 in Reihe geschaltet sind. Der erste Kondensator $C_p$ ist mit dem Ladeschaltungsknoten K und dem ersten Ausgangsanschluss 7 verbunden. Weiterhin ist das erste Sperrelement $D_p$ mit dem ersten Eingangsanschluss 4 und dem ersten Ausgangsanschluss 7 derart verbunden, dass das erste Sperrelement $D_p$ einen Stromfluss von dem ersten Ausgangsanschluss 7 zu dem ersten Eingangsanschluss 4 ermöglicht. Das erste Sperrelement $D_p$ ist als Diode ausgebildet. Die Spule L, der erste Kondensator $C_p$ und das erste Sperrelement $D_p$ bilden dementsprechend eine erste Masche $M_{p2}$ aus. Der zweite Kondensator $C_n$ ist mit dem Ladeschaltungsknoten K und dem zweiten Ausgangsanschluss 8 verbunden. Weiterhin ist das zweite Sperrelement $D_n$ mit dem ersten Eingangsanschluss 4 und dem zweiten Ausgangsanschluss 8 derart verbunden, dass das zweite Sperrelement $D_n$ einen Stromfluss von dem ersten Eingangsanschluss 4 zu dem zweiten Ausgangsanschluss 8 ermöglicht. Das zweite Sperrelement $D_n$ ist als Diode ausgebildet. Die Spule L, das zweite Sperrelement $D_n$ und der zweite Kondensator $C_n$ bilden somit eine zweite Masche $M_{n2}$ aus. Die Sperrelemente $D_p$ und $D_n$ haben somit in Bezug auf die Spule L entgegengesetzte Durchlassrichtungen, so dass ein Stromfluss durch die Spule L in dem Maschen $M_{p2}$ und $M_{n2}$ entgegengesetzt ist.

Der Gleichrichter 9 umfasst weiterhin einen wiederaufladbaren galvanischen Energiespeicher 14. Der galvanische Energiespeicher 14 ist an den ersten Ausgangsanschluss 7 und an den zweiten Ausgangsanschluss 8 angeschlossen. Hierzu ist ein Minuspol des galvanischen Energiespeichers 14 mit dem ersten Ausgangsanschluss 7 und ein Pluspol mit dem zweiten Ausgangsanschluss 8 verbunden. An den Ausgangsanschlüssen 7, 8 wird eine Ausgangsspannung $E_b$ bereitgestellt.

Der elektronische Schalter 13 ist als eine Reihenschaltung aus einem ersten elektronischen Schaltelement $Q_1$ und einem zweiten elektronischem Schaltelement $Q_2$ ausgebildet. Die elektronischen Schaltelementen $Q_1$ und $Q_2$ sind jeweils als selbstsperrender n-Kanal MOSFET ausgebildet. Ein Source-Anschluss $S_1$ des ersten Schaltelements $Q_1$ ist mit einem Referenzknoten $K_0$ verbunden. Der Referenzknoten $K_0$ definiert ein Referenzpotenzial der Steuereinrichtung 10 (Control Circuit GND). Ein Drain-Anschluss $D_1$ des ersten Schaltelements $Q_1$ ist mit dem zweiten Eingangsanschluss 5 verbunden. Weiterhin ist ein Source-Anschluss $S_2$ des zweiten Schaltelements $Q_2$ mit dem Referenzknoten $K_0$ verbunden. Ein Drain-Anschluss $D_2$ des zweiten Schaltelements $Q_2$ ist mit dem Ladeschaltungsknoten K verbunden. Das Referenzpotenzial des Referenzknotens $K_0$ gewährleistet, dass an Gate-Anschlüssen $G_1$, $G_2$ der Schaltelemente $Q_1$ und $Q_2$ in Bezug auf die zugehörigen Source-Anschlüsse $S_1$ und $S_2$ positive Steuerspannungen bzw. Steuersignale $g_1$ und $g_2$ anliegen, wenn die Schaltelemente $Q_1$ und $Q_2$ eingeschaltet werden sollen, und negative Steuerspannungen bzw. Steuersignale $g_1$ und $g_2$ anliegen, wenn die Schaltelemente $Q_1$ und $Q_2$ ausgeschaltet werden sollen.

Eine erste parasitäre Inversdiode $F_1$ ist parallel zu dem ersten Schaltelement $Q_1$ ausgebildet. Die erste Inversdiode $F_1$ ist derart zu dem Source-Anschluss $S_1$ und dem Drain-Anschluss $D_1$ ausgebildet, dass ein Stromfluss in Richtung des ersten Source-Anschlusses $S_1$ gesperrt wird. Entsprechend ist parallel zu dem zweiten Schaltelement $Q_2$ eine zweite parasitäre Inversdiode $F_2$ ausgebildet. Die zweite Inversdiode $F_2$ ist derart zu dem zweiten Source-Anschluss $S_2$ und dem Drain-Anschluss $D_2$ ausgebildet, dass ein Stromfluss in Richtung des zweiten Source-Anschlusses $S_2$ gesperrt wird. Die Inversdioden $F_1$ und $F_2$ haben somit entgegengesetzte Sperrrichtungen. Durch die beschriebene Back-to-Back-Anordnung der Schaltelemente $Q_1$ und $Q_2$ ist somit gewährleistet, dass sowohl bei einer an dem elektronischen Schalter 13 anliegenden positiven Spannung als auch bei einer negativen Spannung mindestens eine der Inversdioden $F_1$ bzw. $F_2$ sperrt. Hierdurch werden parasitäre Ströme und daraus resultierende Verluste vermieden.

Die Steuereinrichtung 10 dient zum Ansteuern des elektronischen Schalters 13. Die Steuereinrichtung 10 weist eine Steuerschaltung 15 zur Erzeugung von Steuersignalen $g_1$ und $g_2$ und eine Versorgungsschaltung 16 zur Bereitstellung einer Versorgungsspannung $v_{cc}$ für die Steuerschaltung 15 auf. Die Steuersignale $g_1$, $g_2$ sind Steuerspannungen.

Die Versorgungsschaltung 16 weist eine Ladungspumpe 17 auf, die eine Diode $D_{cc}$ und einen Kondensator $C_{cc}$ umfasst. Die Diode $D_{cc}$ ist mit dem zweiten Ausgangsanschluss 8 und einem ersten Knoten $k_1$ verbunden. Die Diode $D_{cc}$ ermöglicht einen Stromfluss von dem zweiten Ausgangsanschluss 8 zu dem ersten Knoten $k_1$. Der Kondensator $C_{cc}$ ist mit dem ersten Knoten $k_1$ und dem Referenzknoten $K_0$ verbunden, so dass die Diode $D_{cc}$ und der Kondensator $C_{cc}$ in Reihe geschaltet sind. Die Ladungspumpe 17 ist einstufig ausgebildet. Die Versorgungsspannung $v_{cc}$ liegt über dem Kondensator $C_{cc}$ an, also zwischen dem Knoten $k_1$ und dem Referenzknoten $K_0$.

Die Versorgungsschaltung 16 umfasst ferner einen ohmschen Widerstand $R_b$, der parallel zu dem ersten Kondensator $C_p$ geschaltet ist und mit dem Ladeschaltungsknoten K und dem ersten Ausgangsanschluss 7 verbunden ist.

Für den Gleichrichter 9 und die Versorgungsschaltung 16 gelten beispielhaft folgende Werte:

| | |
|---|---|
| Induktivität der Spule L | 33 $\mu$H, |
| Kapazität des ersten Kondensators $C_p$ | 10 $\mu$F, |
| Kapazität des zweiten Kondensators $C_n$ | 10 $\mu$F, |
| Kapazität des Kondensators $C_{cc}$ | 0,3 $\mu$F, |
| Wert des ohmschen Widerstands $R_b$ | 45 kS2. |

Die Steuerschaltung 15 umfasst einen ersten Komparator 18 zum Erzeugen einer Sägezahnspannung $v_s$ und einen zweiten Komparator 19 zum Erzeugen des Steuersignale $g_1$, $g_2$ zum Ansteuern der elektronischen Schaltelemente $Q_1$, $Q_2$. Durch die Komparatoren 18, 19 wird eine gesteuerte Pulsweitenmodulation (Open-Loop-Pulse-Width-Modulation) realisiert.

Der erste Komparator 18 weist einen Operationsverstärker 20 auf, der als Betriebspotenziale die Versorgungsspannung $v_{cc}$ und das Referenzpotenzial des Referenzknoten $K_0$ hat. An den Knoten $k_1$ ist ein Spannungsteiler aus einem ersten ohmschen Widerstand $R_1$ und einem zweiten ohmschen Widerstand $R_2$ angeschlossen. Der erste ohmsche Widerstand $R_1$ ist mit dem Referenzknoten $K_0$ verbunden, wohingegen der zweite ohmsche Widerstand $R_2$ mit dem Knoten $k_1$ verbunden ist. Zwischen dem ohmschen Widerständen $R_1$ und $R_2$ wird an einem Knoten $n_1$ eine Spannung $v_x$ abgegriffen und einem nicht-invertierenden Eingang (Plus-Eingang) des Operationsverstärkers 20 zugeführt. Der Knoten $n_1$ ist also mit dem nicht-invertierenden Eingang verbunden. Ein Ausgang des Operationsverstärkers 20 ist über einen dritten ohmschen Widerstand $R_3$ mit einem invertierenden Eingang (Minus-Eingang) des Operationsverstärkers 20 verbunden. Weiterhin ist der Ausgang über einen ohmschen Widerstand $R_4$ mit dem nicht-invertierenden Eingang des Operationsverstärkers 20 verbunden. Ein Kondensator $C_1$ ist mit dem invertierenden Eingang des Operationsverstärkers 20 und dem Referenzknoten $K_0$ verbunden. Die Sägezahnspannung $v_s$ liegt über dem Kondensator $C_1$ an. Die Verbindung zwischen dem ohmschen Widerstand $R_3$ und dem Kondensator $C_1$ definiert somit einen Knoten $n_2$, an dem die Sägezahnspannung $v_s$ bereitgestellt wird.

Der zweite Komparator 19 dient zum Vergleichen der Sägezahnspannung $v_s$ mit einer Vergleichsspannung $v_y$. Hierzu weist der zweite Komparator 19 einen Operationsverstärker 21 auf. Der Operationsverstärker 21 hat als Betriebspotenziale die Versorgungsspannung $v_{cc}$ und das Referenzpotenzial an dem Referenzknoten $K_0$. Der zweite Komparator 19 umfasst einen Spannungsteiler aus einem ohmschen Widerstand $R_5$ und einem ohmschen Widerstand $R_6$. Der Spannungsteiler ist an den Referenzknoten $K_0$ und den Knoten $k_1$ angeschlossen. Hierzu ist der ohmsche Widerstand $R_5$ mit dem Referenzknoten $K_0$ verbunden, wohingegen der ohmsche Widerstand $R_6$ mit dem Knoten $k_1$ verbunden ist. Zwischen den ohmschen Widerständen $R_5$ und $R_6$ wird die Vergleichsspannung $v_y$ abgegriffen. Hierzu ist ein Knoten $n_3$ zwischen den ohmschen Widerständen $R_5$ und $R_6$ mit einem nicht-invertierenden Eingang (Plus-Eingang) des Operationsverstärkers 21 verbunden. Die Vergleichsspannung $v_y$ liegt somit über dem ohmschen Widerstand $R_5$, also zwischen dem Knoten $n_3$ und dem Referenzknoten $K_0$ an. Der Knoten $n_2$ ist mit einem invertierenden Eingang (Minus-Eingang) des Operationsverstärkers 21 verbunden. An einem Ausgang des Operationsverstärkers 21 werden die Steuersignale $g_1$ und $g_2$ bereitgestellt. Die Steuersignale $g_1$ und $g_2$ liegen an den Gate-Anschlüssen $G_1$, $G_2$ der Schaltelemente $Q_1$ und $Q_2$ an.

Die Steuereinrichtung 10 ist derart ausgebildet, dass bei Anliegen der positiven Spannung $v_{hp}$ eine erste Schaltfolge mit einem ersten Schaltzustand $Z_{1p}$ und einem darauffolgenden zweiten Schaltzustand $Z_{2p}$ realisiert wird. Für die erste Schaltfolge gilt:

|       | $Z_{1p}$ | $Z_{2p}$ |
|-------|----------|----------|
| $Q_1$ | 1        | 0        |
| $Q_2$ | 1        | 0        |

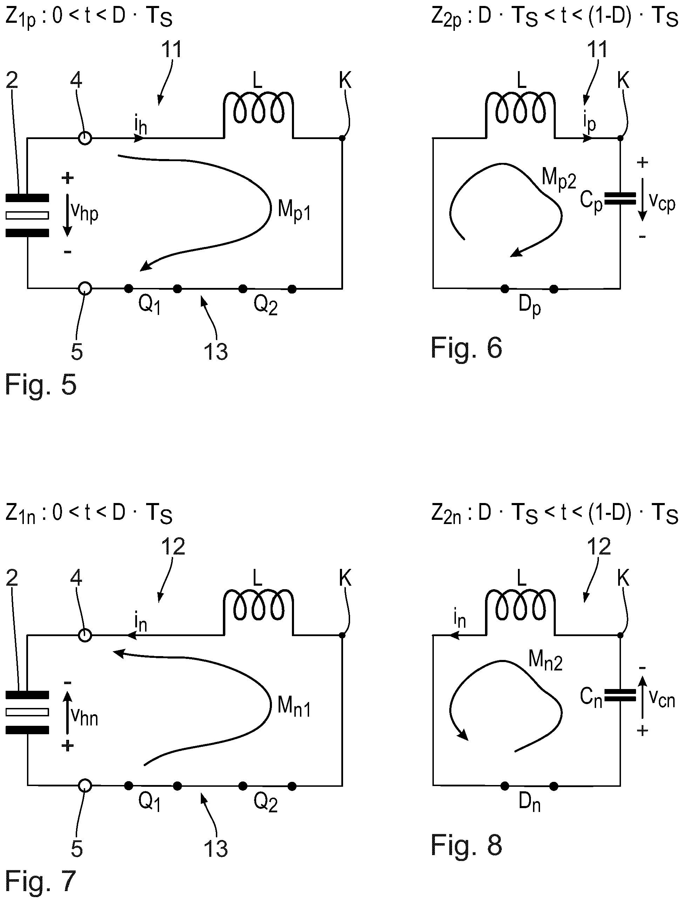

wobei 1 EIN und 0 AUS bedeutet. Der Schaltzustand $Z_{1p}$ ist in Fig. 5 und der Schaltzustand $Z_{2p}$ in Fig. 6 veranschaulicht.

Die Steuereinrichtung 10 ist ferner derart ausgebildet, dass bei Anliegen der negativen Spannung $v_{hn}$ eine zweite Schaltfolge mit einem ersten Schaltzustand $Z_{1n}$ und einem darauffolgenden zweiten Schaltzustand $Z_{2n}$ realisiert wird. Für die zweite Schaltfolge gilt:

|       | $Z_{1n}$ | $Z_{2n}$ |
|-------|----------|----------|
| $Q_1$ | 1        | 0        |
| $Q_2$ | 1        | 0        |

wobei 1 Ein und 0 AUS bedeutet. Der Schaltzustand $Z_{1n}$ ist in Fig. 7 und der Schaltzustand $Z_{2n}$ in Fig. 8 veranschaulicht.

Die erste Schaltfolge und die zweite Schaltfolge erstrecken sich jeweils über eine Periodendauer Ts. Für die Periodendauer Ts gilt: Ts = 1/fs, wobei fs eine Schaltfrequenz der Steuereinrichtung 10 bezeichnet. Der jeweilige erste Schaltzustand $Z_{1p}$ bzw. $Z_{1n}$ hat die Zeitdauer $D \cdot T_S$ und der jeweils zugehörige zweite Schaltzustand $Z_{2p}$ bzw. $Z_{2n}$ die Zeitdauer $(1 - D) \cdot T_S$, wobei D einen Tastgrad bzw. Ansteuergrad (Duty cycle) bezeichnet.

Die Funktion des Energieerzeugers 1 ist wie folgt:

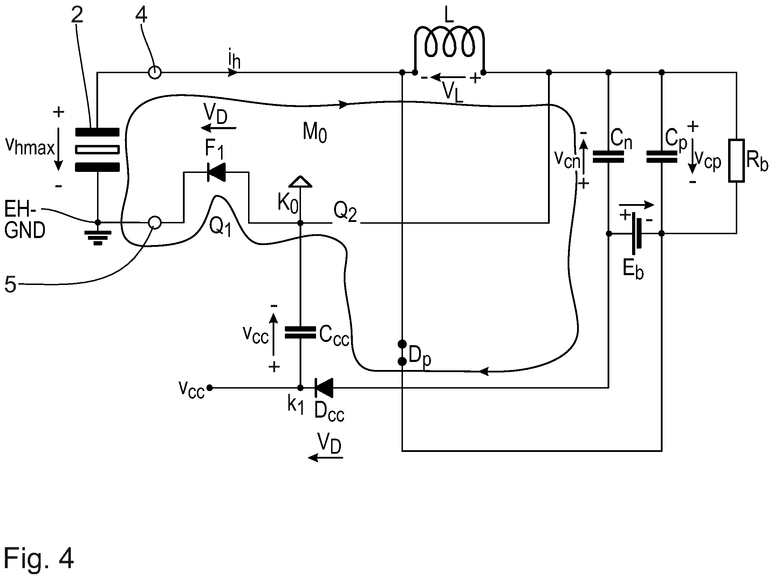

Zunächst wird die Versorgungsschaltung 16 in Betrieb genommen, um die Versorgungsspannung $v_{cc}$ zu erzeugen und der Steuerschaltung 15 bereitzustellen. Dies ist in Fig. 4 veranschaulicht. Die Versorgungsschaltung 16 basiert auf der einstufigen Ladungspumpe 17, die den Energiegewinner 2, die Spule L und den zweiten Kondensator $C_n$ nutzt, um eine ausreichende Versorgungsspannung $v_{cc}$ zu erzeugen. Gemäß der in Fig. 4 eingezeichneten Masche $M_0$ gilt für die Versorgungsspannung $v_{cc}$:

$$v_{cc} = v_{cn} + v_L + v_{hmax} - 2 \cdot V_D = E_b + v_{hmax} - 2 \cdot V_D, \tag{1}$$

wobei $E_b$ die Ausgangsspannung bzw. die Spannung des galvanischen Energiespeichers 14, $v_{hmax}$ die maximale Spannung des Energiegewinners 2, $v_L$ die Spannung über der Spule L und $v_{cn}$ die Spannung über dem zweiten Kondensator $C_n$ sowie $V_D$ die Spannung über den Dioden $D_{cc}$ und $F_1$ bezeichnet. Der Kondensator $C_{cc}$ wird mittels der Spannung $v_h$ des Energiegewinners 2 geladen, so dass eine ausreichende Versorgungsspannung $v_{cc}$ bereitgestellt wird. Der ohmsche Widerstand $R_b$ gewährleistet, dass die Spannung $E_b$ über den Kondensatoren $C_p$ und $C_n$ verteilt wird und verhindert ein im Wesentlichen vollständiges Anliegen der Spannung $E_b$ über dem Kondensator $C_p$. Hierdurch wird eine zuverlässige Inbetriebnahme der Versorgungsschaltung 16 gewährleistet und ein Überlasten des Kondensators $C_p$ vermieden. Der ohmsche Widerstand $R_b$ ist hochohmig gewählt, so dass die durch den ohmschen Widerstand $R_b$ verursachten Verluste gering sind.

Bei Bereitstellung einer ausreichenden Versorgungsspannung $v_{cc}$ erzeugt die Steuerschaltung 15 die Steuersignale $g_1$, $g_2$ bzw. die Steuerspannungen $g_1$, $g_2$ zum Ansteuern der elektronischen Schaltelemente $Q_1$ und $Q_2$. Der Energiegewinner 2 erzeugt die Spannung $v_h$, aus der der Strom $i_h$ resultiert. Bei Anliegen der positiven Spannung $v_{hp}$ realisiert die Steuerschaltung 15 die erste Schaltfolge. Zunächst werden in dem ersten Schaltzustand $Z_{1p}$ die Schaltelemente $Q_1$ und $Q_2$ synchron eingeschaltet, so dass der Strom $i_h$ in der Masche $M_{p1}$ durch die Spule L fließt. Dies ist in Fig. 5 veranschaulicht. In dem ersten Schaltzustand $Z_{1p}$ wird somit elektrische Energie in der Spule L gespeichert.

In dem darauffolgenden zweiten Schaltzustand $Z_{2p}$ werden die elektronischen Schaltelemente $Q_1$ und $Q_2$ geöffnet, so dass die Spule L aufgrund der gespeicherten Energie einen Strom in der Masche $M_{p2}$ treibt und den Kondensator $C_p$ lädt. Der Strom $i_p$ fließt in der Masche $M_{p2}$ über das als Diode ausgebildete erste Sperrelement $D_p$. An dem ersten Kondensator $C_p$ liegt die Spannung $v_{cp}$ an. Dies ist in Fig. 6 veranschaulicht. Aufgrund der Spannung $v_{cp}$ fließt ein Strom $i_b$, der den galvanischen Energiespeicher 14 lädt.

Bei Anliegen der negativen Spannung $v_{hn}$ realisiert die Steuerschaltung 15 die zweite Schaltfolge. In dem ersten Schaltzustand $Z_{1n}$ werden die Schaltelemente $Q_1$ und $Q_2$ synchron eingeschaltet, so dass der Strom in in einer Masche $M_{n1}$ über die Spule L fließt und elektrische Energie in der Spule L gespeichert wird. Dies ist in Fig. 7 veranschaulicht. In dem ersten Schaltzustand $Z_{1n}$ wird somit elektrische Energie in der Spule L gespeichert.

In dem darauffolgenden zweiten Schaltzustand $Z_{2n}$ werden die elektronischen Schaltelemente $Q_1$ und $Q_2$ geöffnet, so dass die Spule L aufgrund der gespeicherten Energie einen Strom in der Masche $M_{n2}$ treibt und den Kondensator $C_n$ lädt. Der Strom $i_n$ fließt in der Masche $M_{n2}$ über das als Diode ausgebildete zweite Sperrelement $D_n$. An dem zweiten Kondensator $C_n$ liegt die Spannung $v_{cn}$ an. Dies ist in Fig. 8 veranschaulicht. Aufgrund der Spannung $v_{cn}$ fließt ein Strom $i_b$, der den galvanischen Energiespeicher 14 lädt.

Dadurch, dass bei Anliegen der positiven Spannung $v_{hp}$ und bei Anliegen der negativen Spannung $v_{hn}$ jeweils die einzige Spule L genutzt wird, ist der Gleichrichter 9 einfach und kompakt aufgebaut. Dadurch, dass nur eine einzige Spule L benötigt wird, werden zudem die Kosten reduziert. Die von den Ladeschaltungen 11 und 12 gemeinsam genutzte Spule L ist nicht nur Teil des Gleichrichters 9, sondern wird zusätzlich zur Inbetriebnahme der Versorgungsschaltung 16 genutzt. Dadurch, dass die Spannung $v_h$ des Energiegewinners 2 in einer Stufe gleichgerichtet wird, wird die Gewinnung elektrischer Energie mittels des Gleichrichters 9 optimiert. Zudem ermöglicht der Gleichrichter 9 die Gewinnung elektrischer Energie aus einer äußerst niedrigen Spannung $v_h$. Der elektromagnetisch ausgebildete Energiegewinner 2 weist typischerweise eine Spannung von 1 mV bis 1,2 V, insbesondere von 10 mV bis 750 mV, und insbesondere von 50 mV bis 500 mV auf.

Die Steuereinrichtung 10 ist derart ausgebildet, dass eine Eingangsimpedanz $Z_{in}$ an den Eingangsanschlüssen 4, 5 an den Energiegewinner 2 angepasst wird und die gewonnene elektrische Energie somit optimiert bzw. maximiert wird. Der Energieerzeuger 1 bzw. die Vorrichtung 3 ermöglicht bzw. realisiert somit ein sogenanntes Maximum-Power-Point-Tracking (MPPT). Die Steuereinrichtung 10 weist dementsprechend eine Maximum-Power-Point-Tracking-Funktion auf. Die Messung einer Spannung, eines Stroms oder eine Nulldurchgangserkennung bzw. Polaritätserkennung ist hierzu nicht erforderlich. Die Vorrichtung 3 wird in einem diskontinuierlichen Modus (DCM: Discontineous Conduction Mode) betrieben und ist aus Sicht des Energiegewinners 2 ein einstellbares und rein ohmsches Element. Die Eingangsimpedanz $Z_{in}$ bzw. der Eingangswiderstand der Vorrichtung 3 wird an den Innenwiderstand des Energiegewinners 2 angepasst, wodurch das Maximum-Power-Point-Tracking erzielt wird. Für die Eingangsimpedanz $Z_{in}$ der Vorrichtung 3 gilt:

$$Z_{in} = \frac{2 \cdot f_S \cdot L_0}{D^2} \qquad\qquad (2)$$

wobei $L_0$ den Induktivitätswert der Spule L, fs die Schaltfrequenz und D den Tastgrad bezeichnet. Die Eingangsimpedanz $Z_{in}$ wird über den Tastgrad D eingestellt.

Die elektronischen Schaltelemente $Q_1$ und $Q_2$ werden aufgrund der Back-to-Back-Anordnung synchron betrieben. Außerdem werden die elektronischen Schaltelemente $Q_1$ und $Q_2$ in der ersten Schaltfolge, also bei Anliegen der positiven Spannung $v_{hp}$, und in der zweiten Schaltfolge, also bei Anliegen der negativen Spannung $v_{hn}$, in entsprechender Weise betrieben. Das bedeutet, dass die elektronischen Schaltelemente $Q_1$ und $Q_2$ in dem jeweiligen ersten Schaltzustand $Z_{1p}$ bzw. $Z_{1n}$ geschlossen sind, wohingegen die elektronischen Schaltelemente $Q_1$ und $Q_2$ in dem zugehörigen zweiten Schaltzustand $Z_{2p}$ bzw. $Z_{2n}$ offen sind. Dadurch, dass der Referenzknoten $K_0$ mit den Source-Anschlüssen $S_1$ und $S_2$ verbunden ist, können die elektronischen Schaltelemente $Q_1$ und $Q_2$ in einfacher Weise direkt von der Steuerschaltung 15 angesteuert werden.

Die Anpassung der Eingangsimpedanz $Z_{in}$ erfolgt über die Auslegung der Steuerschaltung 15. Durch die Komparatoren 18, 19 wird eine gesteuerte Pulsweitenmodulation (Open-Loop-Pulse-Width-Modulation) realisiert. Der erste Komparator 18 lädt den Kondensator $C_1$ über den ohmschen Widerstand $R_3$ und vergleicht die Spannung $v_x$ mit der über den Kondensator $C_1$ anliegenden Spannung derart, dass der Kondensator $C_1$ entladen wird, wenn die Spannung über dem Kondensator $C_1$ größer als die Spannung $v_x$ ist. Hierdurch entsteht die Sägezahnspannung $v_s$, die über dem Kondensator $C_1$ anliegt. Der zweite Komparator 19 vergleicht die Sägezahnspannung $v_s$ mit der Vergleichsspannung $v_y$ und erzeugt die Steuersignale $g_1$ und $g_2$. Durch den Vergleich der Sägezahnspannung $v_s$ mit der Vergleichsspannung $v_y$ wird automatisch die Eingangsimpedanz $Z_{in}$ bestimmt und die Steuersignale $g_1$ und $g_2$ derart erzeugt, dass mittels des Tastgrads D die Eingangsimpedanz $Z_{in}$ an den Energiegewinner 2 angepasst wird. Da der Energiegewinner 2 eine im Wesentlichen maximale Energiegewinnung bei einer Eingangsimpedanz $Z_{in}$ zwischen 7 S2 und 13 Ω ermöglicht, ist eine exakte Anpassung der Eingangsimpedanz $Z_{in}$ an den Energiegewinner 2 nicht erforderlich, um eine effiziente Energiegewinnung zu gewährleisten. Schwankungen bei der Versorgungsspannung $v_{cc}$ wirken sich somit nicht nachteilig auf die Effizienz der Energiegewinnung aus. Der Tastgrad D und die Schaltfrequenz fs können beispielsweise über den ohmschen Widerstand $R_6$ und den Kondensator $C_1$ eingestellt werden.

Die Steuersignale $g_1$ und $g_2$ werden somit in zeitlicher Hinsicht so eingestellt, dass der jeweilige erste Schaltzustand $Z_{1p}$ bzw. $Z_{1n}$ bezogen auf eine Periodendauer $T_S$ für eine Zeitdauer $0 < t < D \cdot T_S$ eingestellt wird und der jeweilige zweite Schaltzustand $Z_{2p}$ bzw. $Z_{2n}$ für die Zeitdauer $D \cdot T_S < t < (1 - D) \cdot Ts$ eingestellt wird.

Mittels der Spannungen $v_{cp}$ und $v_{cn}$ wird der galvanische Energiespeicher 14 geladen, der die Spannung $E_b$ bereitstellt. Mittels der Spannung $E_b$ wird die Last 6 mit elektrischer Energie versorgt.

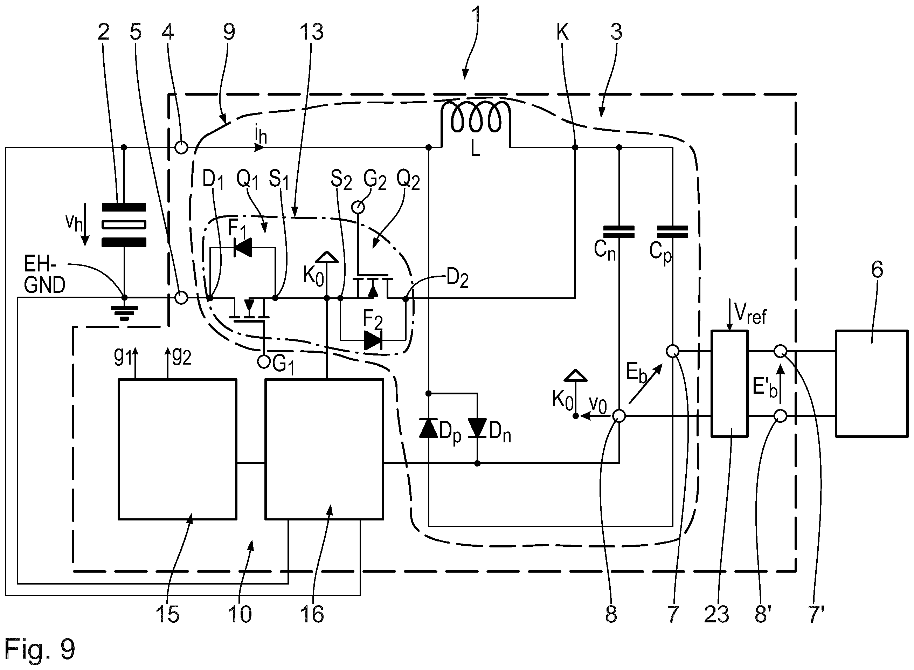

Nachfolgend ist anhand der Fig. 9 bis 12 ein zweites erfindungsgemäßes Ausführungsbeispiel beschrieben. Im Unterschied zu dem ersten Ausführungsbeispiel weist der Gleichrichter 9 keinen galvanischen Energiespeicher auf. Zur Inbetriebnahme der Versorgungsschaltung 16 und zur Bereitstellung der Versorgungsspannung $v_{cc}$ weist die Versorgungsschaltung 16 eine Haupt-Ladungspumpe 17 und eine Hilfs-Ladungspumpe 22 auf. Ein ohmscher Widerstand $R_b$ entsprechend dem ersten Ausführungsbeispiel ist nicht erforderlich.

Die Hilfs-Ladungspumpe 22 ist mit den Eingangsanschlüssen 4, 5 verbunden. Die Ladungspumpe 22 ist als passive einstufige Villard-Ladungspumpe ausgebildet. Ein vierter Kondensator $C_{b1}$ ist mit dem ersten Eingangsanschluss 4 und einem zweiten Knoten $k_2$ verbunden. Eine zweite Diode $D_{b1}$ ist mit dem zweiten Eingangsanschluss 5 und dem zweiten Knoten $k_2$ derart verbunden, dass die Diode $D_{b1}$ einen Stromfluss von dem zweiten Eingangsanschluss 5 zu dem Knoten $k_2$ ermöglicht. Ein fünfter Kondensator $C_{b2}$ ist mit dem zweiten Eingangsanschluss 5 und einem dritten Knoten $k_3$ verbunden. Eine dritte Diode $D_{b2}$ ist mit dem zweiten Knoten $k_2$ und dem dritten Knoten $k_3$ derart verbunden, dass die dritte Diode $D_{b2}$ einen Stromfluss von dem zweiten Knoten $k_2$ zu dem dritten Knoten $k_3$ zulässt. Eine vierte Diode $D_{b3}$ ist mit dem ersten Knoten $k_1$ der Haupt-Ladungspumpe 17 derart verbunden, dass die vierte Diode $D_{b3}$ einen Stromfluss von dem dritten Knoten $k_3$ zu dem ersten Knoten $k_1$ und dem Referenzknoten $K_0$ zulässt. Die Haupt-Ladungspumpe 17 ist entsprechend der Ladungspumpe 17 des ersten Ausführungsbeispiels ausgebildet.

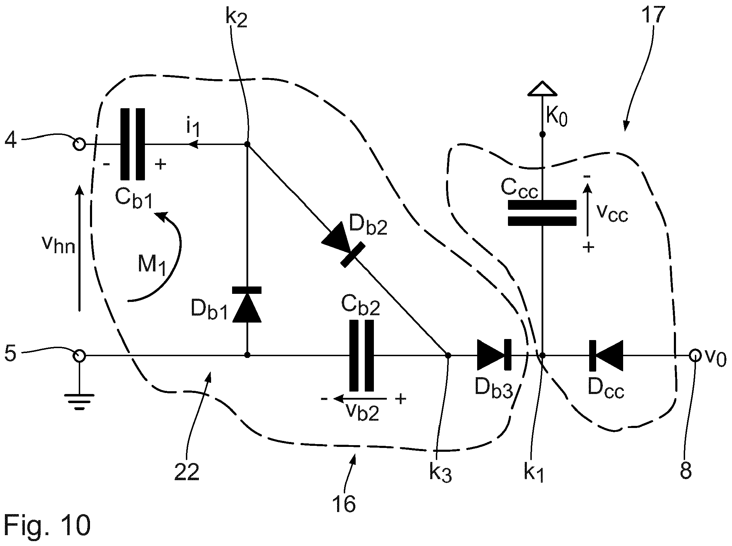

Der Energieerzeuger 1 ermöglicht eine Inbetriebnahme der Steuereinrichtung 10 ohne einen galvanischen Energiespeicher. Hierzu wird zunächst die Hilfs-Ladungspumpe 22 in Betrieb genommen und mit dieser anschließend die Haupt-Ladungspumpe 17. Der Energiegewinner 2 stellt typischerweise in wenigen Zyklen nach einer Anregung eine vergleichsweise hohe Spannung $v_h$ bereit, die sich anschließend aufgrund einer Dämpfung erheblich reduziert. In diesen Zyklen wird die Hilfs-Ladungspumpe 22 in Betrieb genommen. Liegt die negative Spannung $v_{hn}$ an, so wird über die Diode $D_{b1}$ der Kondensator $C_{b1}$ geladen. Hierzu fließt über die Diode $D_{b1}$ ein Ladestrom $i_1$ zu dem Kondensator $C_{b1}$. Die aktive Masche $M_1$ ist in Fig. 10 veranschaulicht.

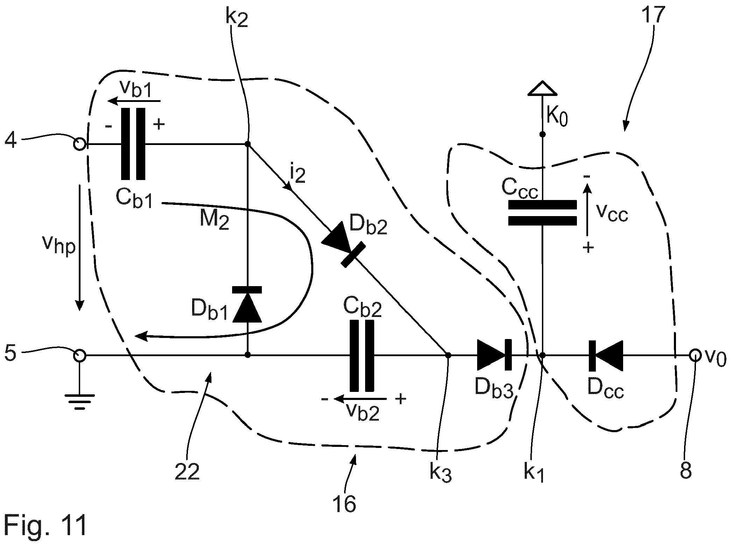

Beim anschließenden Anliegen der positiven Spannung $v_{hp}$ lädt der aufgeladene Kondensator $C_{b1}$ mit der anliegenden Spannung $v_{b1}$ und der Energiegewinner 2 mit der Spannung $v_{hp}$ über die Diode $D_{b2}$ den Kondensator $C_{b2}$. Die aktive Masche $M_2$ und der Ladestrom $i_2$ über die Diode $D_{b2}$ ist in Fig. 11 veranschaulicht. Für die Spannung $v_{b2}$ gilt:

$$v_{b2} = 2 \cdot v_{hmax} - 2 \cdot V_D \qquad\qquad (3)$$

wobei $v_{hmax}$ die maximale Spannung des Energiegewinners 2 und $V_D$ die Schwellspannung ist.

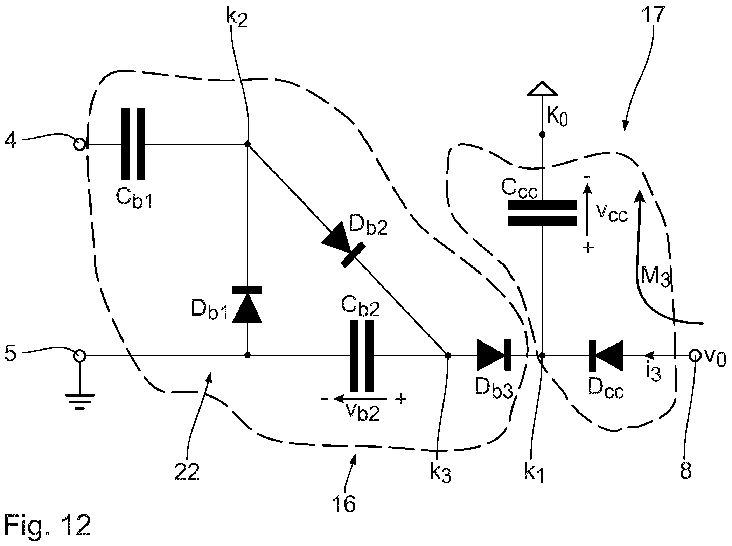

Anschließend wird über die Diode $D_{b3}$ der Kondensator $C_{cc}$ geladen, wodurch die Steuerschaltung 15 mit einer ausreichenden Versorgungsspannung $v_{cc}$ versorgt wird und Steuersignale $g_1$, $g_2$ zur Ansteuerung der elektronischen Schaltelemente $Q_1$, $Q_2$ erzeugt. Hierdurch wird der Gleichrichter 9 in Betrieb genommen und die Ausgangsspannung $E_b$ steigt. Wenn $E_b$ höher als die Spannung $v_{b2}$ ist, wird die Hilfs-Ladungspumpe 22 automatisch deaktiviert. Dann ist ausschließlich die Haupt-Ladungspumpe 17 aktiv. Die Diode $D_{b3}$ trennt die Hilfs-Ladungspumpe 22 von der Haupt-Ladungspumpe 17, so dass ausschließlich die Haupt-Ladungspumpe 17 aktiv ist. Die aktive Masche $M_3$ und der Lade-strom $i_3$ sind in Fig. 12 veranschaulicht. Für die Spannung $v_{cc}$ gilt:

$$v_{cc} = v_0 + v_{hmax} - 2 \cdot V_D \qquad\qquad (4)$$

wobei $v_0$ die Spannung an dem Eingangsanschluss 8 ist. Alle Dioden sind vorzugsweise als Schottky-Dioden mit einem Schwellspannung $V_D$ zwischen 0,1 bis 0,2 V ausgebildet.

An den Ausgangsanschlüssen 7, 8 ist ein Spannungsregler 23 angeschlossen. Der Spannungsregler 23 dient zur Stabilisierung der Spannung $E_b$ und stellt an Ausgangsanschlüssen 7', 8' eine geregelte Ausgangsspannung $E'_b$ bereit. Die Last 6 ist an die Ausgangsanschlüsse 7', 8' angeschlossen. Aufgrund des sich verändernden Ladezustands der Kondensatoren $C_p$ und $C_n$ schwankt die Spannung $E_b$ an den Ausgangsanschlüssen 7, 8. Der Spannungsregler 23 vergleicht die Spannung $E_b$ mit einer Soll-Spannung $V_{ref}$ und stellt ausgangsseitig die geregelte Spannung $E'_b$ bereit. Hierzu umfasst der Spannungsregler 23 einen Gleichspannungswandler (DC-DC-Wandler), dessen ausgangsseitige Spannung $E'_b$ geregelt wird. Hierzu ist der Gleichspannungswandler Teil eines Spannungsregelkreises, der die ausgangsseitige Spannung $E'_b$ mit der Soll-Spannung $V_{ref}$ vergleicht und eine Spannungsabweichung zwischen der Soll-Spannung $V_{ref}$ und der ausgangsseitigen Spannung $E'_b$ einem Regler zuführt, der den Gleichspannungswandler zur Ausregelung der Spannungsabweichung ansteuert. Der Regler ist als PID-Regler ausgebildet. Hinsichtlich des weiteren Aufbaus und der weiteren Funktionsweise des Energieerzeugers 1 wird auf die Beschreibung des ersten Ausführungsbeispiels verwiesen.

## Patentansprüche

1. Vorrichtung zur Gewinnung elektrischer Energie umfassend

   - einen Gleichrichter (9)

     -- mit einem ersten Eingangsanschluss (4) und einem zweiten Eingangsanschluss (5) zum Verbinden mit einem Energiegewinner (2),
     -- mit einem ersten Ausgangsanschluss (7) und einem zweiten Ausgangsanschluss (8) zur Bereitstellung einer Ausgangsspannung ($E_b$),
     -- mit einer ersten Ladeschaltung (11) zur Energiegewinnung aus einer an den Eingangsanschlüssen (4, 5) anliegenden positiven Spannung ($v_{hp}$) des Energiegewinners (2) mit

       --- einem elektronischen Schalter (13), wobei der elektronische Schalter (13) eine Reihenschaltung aus einem ersten elektronischen Schaltelement ($Q_1$) und einem zweiten elektronischen Schaltelement ($Q_2$) umfasst,
       --- einer Spule (L),
       --- einem ersten Kondensator ($C_p$), und
       --- einem ersten Sperrelement ($D_p$),

     -- mit einer zweiten Ladeschaltung (12) zur Energiegewinnung aus einer an den Eingangsanschlüssen (4, 5) anliegenden negativen Spannung ($v_{hn}$) des Energiegewinners (2) mit

       --- dem elektronischen Schalter (13),
       --- der Spule (L),
       --- einem zweiten Kondensator ($C_n$), und
       --- einem zweiten Sperrelement ($D_n$),

-- wobei die Spule (L) mit dem ersten Eingangsanschluss (4) und einem Ladeschaltungsknoten (K) verbunden ist, und
-- wobei der elektronische Schalter (13) mit dem zweiten Eingangsanschluss (5) und dem Ladeschaltungsknoten (K) verbunden ist,

- eine Steuereinrichtung (10) zum Ansteuern des elektronischen Schalters (13),

-- wobei die Steuereinrichtung (10) eine Steuerschaltung (15) zur Erzeugung von Steuersignalen ($g_1$, $g_2$) und eine Versorgungsschaltung (16) zur Bereitstellung einer Versorgungsspannung ($v_{cc}$) für die Steuerschaltung (15) umfasst,
-- wobei die Steuereinrichtung (10) zur Bildung der Versorgungsschaltung (16) mindestens eine Ladungspumpe (17, 22) umfasst,

**dadurch gekennzeichnet,**

**dass** der erste Kondensator (Cp) mit dem Ladeschaltungsknoten (K) und dem ersten Ausgangsanschluss (7) verbunden ist,
**dass** der zweite Kondensator (Cn) mit dem Ladeschaltungsknoten (K) und dem zweiten Ausgangsanschluss (8) verbunden ist,
**dass** das erste Sperrelement (Dp) mit dem ersten Eingangsanschluss (4) und dem ersten Ausgangsanschluss (7) verbunden ist,
**dass** das zweite Sperrelement (Dn) mit dem ersten Eingangsanschluss (4) und dem zweiten Ausgangsanschluss (8) verbunden ist,
**dass** eine Ladungspumpe (17) mit einem der Ausgangsanschlüsse (7, 8) und einem Knoten $K_0$ zwischen den zwei in Reihe geschalteten elektronischen Schaltelementen ($Q_1$, $Q_2$) des elektronischen Schalters (13) verbunden ist, wobei der Knoten $K_0$ einen Referenzknoten bildet, der für die Steuerschaltung (15) zur Erzeugung der Steuersignale ($g_1$, $g_2$) ein Referenzpotenzial aufweist,
**dass** eine Hilfs-Ladungspumpe (22) mit einer von der Ladungspumpe (17) gebildeten Haupt-Ladungspumpe verbunden ist,
**dass** die Hilfs-Ladungspumpe (22) mit den Eingangsanschlüssen (4, 5) verbunden ist,
**dass** die Haupt-Ladungspumpe (17) eine Reihenschaltung aus einer erste Diode ($D_{cc}$) und einem dritten Kondensator ($C_{cc}$) umfasst,
**dass** die Hilfs-Ladungspumpe (22) an einen ersten Knoten ($k_1$) angeschlossen ist, der zwischen der ersten Diode ($D_{cc}$) und dem dritten Kondensator ($C_{cc}$) ausgebildet ist,
**dass** die Hilfs-Ladungspumpe (22) umfasst:

- einen vierten Kondensator ($C_{b1}$), der mit dem ersten Eingangsanschluss (4) und einem zweiten Knoten ($k_2$) verbunden ist,
- eine zweite Diode ($D_{b1}$), die mit dem zweiten Eingangsanschluss (5) und dem zweiten Knoten ($k_2$) verbunden ist,
- einen fünften Kondensator ($C_{b2}$), der mit dem zweiten Eingangsanschluss (5) und einem dritten Knoten ($k_3$) verbunden ist,
- eine dritte Diode ($D_{b2}$), die mit dem zweiten Knoten ($k_2$) und dem dritten Knoten ($k_3$) verbunden ist, und
- eine vierte Diode ($D_{b3}$), die mit dem dritten Knoten ($k_3$) und dem ersten Knoten ($k_1$) verbunden ist.

2. Vorrichtung nach Anspruch 1, **dadurch gekennzeichnet,**
**dass** der elektronische Schalter (13) mindestens eine Inversdiode ($F_1$, $F_2$) umfasst, die parallel zu dem jeweiligen elektronischen Schaltelement ($Q_1$, $Q_2$) geschaltet ist.

3. Vorrichtung nach Anspruch 1 oder 2, **dadurch gekennzeichnet,**
**dass** eine parallel zu dem ersten elektronischen Schaltelement ($Q_1$) geschaltete erste Inversdiode ($F_1$) und eine parallel zu dem zweiten elektronischen Schaltelement ($Q_2$) geschaltete zweite Inversdiode ($F_2$) entgegengesetzte Sperrrichtungen haben.

4. Vorrichtung nach einem der Ansprüche 1 bis 3, **dadurch gekennzeichnet,**
**dass** die Spule (L), der erste Kondensator ($C_p$) und das erste Sperrelement ($D_p$) zur Energieübertragung von der Spule (L) zu dem ersten Kondensator ($C_p$) eine erste Masche ($M_{p2}$) ausbilden.

**5.** Vorrichtung nach einem der Ansprüche 1 bis 4, **dadurch gekennzeichnet,**
**dass** die Spule (L), der zweite Kondensator ($C_n$) und das zweite Sperrelement ($D_n$) zur Energieübertragung von der Spule (L) zu dem zweiten Kondensator ($C_n$) eine zweite Masche ($M_{n2}$) ausbilden.

**6.** Vorrichtung nach einem der Ansprüche 1 bis 5, **dadurch gekennzeichnet,**
**dass** die Versorgungsschaltung (16) einen ohmschen Widerstand ($R_b$) umfasst, der parallel zu dem ersten Kondensator ($C_p$) geschaltet ist.

**7.** Vorrichtung nach einem der Ansprüche 1 bis 6, **dadurch gekennzeichnet,**
**dass** die Steuereinrichtung (10) eine erste Schaltfolge bei Anliegen einer positiven Spannung ($v_{hp}$) an den Eingangsanschlüssen (4, 5) umfasst, wobei für die erste Schaltfolge gilt:

|       | $Z_{1p}$ | $Z_{2p}$ |
|-------|----------|----------|
| $Q_1$ | 1        | 0        |
| $Q_2$ | 1        | 0        |

wobei

$Q_1$ und $Q_2$ zwei in Reihe geschaltete elektronische Schaltelemente des elektronischen Schalters (13) bezeichnet,
$Z_{1p}$ und $Z_{2p}$ zwei aufeinanderfolgende Schaltzustände der ersten Schaltfolge bezeichnet, und 1 EIN und 0 AUS bedeutet.

**8.** Vorrichtung nach einem der Ansprüche 1 bis 7, **dadurch gekennzeichnet,**
**dass** die Steuereinrichtung (10) eine zweite Schaltfolge bei Anliegen einer negativen Spannung ($v_{hn}$) an den Eingangsanschlüssen (4, 5) umfasst, wobei für die zweite Schaltfolge gilt:

|       | $Z_{1n}$ | $Z_{2n}$ |
|-------|----------|----------|
| $Q_1$ | 1        | 0        |
| $Q_2$ | 1        | 0        |

wobei

$Q_1$ und $Q_2$ zwei in Reihe geschaltete elektronische Schaltelemente des elektronischen Schalters (13) bezeichnet,
$Z_{1n}$ und $Z_{2n}$ zwei aufeinanderfolgende Schaltzustände der zweiten Schaltfolge bezeichnet, und
1 EIN und 0 AUS bedeutet.

**9.** Vorrichtung nach einem der Ansprüche 1 bis 8, **dadurch gekennzeichnet,**
**dass** die Steuerschaltung (15) einen ersten Komparator (18) zur Erzeugung einer Sägezahnspannung ($v_s$) und einen zweiten Komparator (19) zur Erzeugung von Steuersignalen ($g_1$, $g_2$) für den elektronischen Schalter (13) umfasst.

**10.** Vorrichtung nach einem der Ansprüche 1 bis 9, **dadurch gekennzeichnet,**
**dass** die Steuerschaltung (15) derart ausgebildet ist, dass eine Eingangsimpedanz ($Z_{in}$) an den Eingangsanschlüssen (4, 5) mittels der erzeugten Steuersignale ($g_1$, $g_2$) an den Energiegewinner (2) anpassbar ist.

**11.** Energieerzeuger mit

- einer Vorrichtung (3) nach einem der Ansprüche 1 bis 10, und
- einem an den Eingangsanschlüssen (4, 5) angeschlossenen Energiegewinner (2) zur Bereitstellung einer alternierenden Spannung ($v_h$).

**Claims**

1. A device for harvesting electrical energy, comprising

- a rectifier (9) comprising

-- a first input terminal (4) and a second input terminal (5) for connecting to an energy harvester (2),
-- a first output terminal (7) and a second output terminal (8) for providing an output voltage ($E_b$),
-- a first charging circuit (11) for harvesting energy from a positive voltage ($v_{hp}$) of the energy harvester (2) which is applied to the input terminals (4, 5), comprising

--- an electronic switch (13), wherein the electronic switch (13) comprises a series connection including at least one first electronic switching element ($Q_1$) and one second electronic switching element ($Q_2$),
--- a coil (L),
--- a first capacitor ($C_p$), and
--- a first blocking element ($D_p$),

-- a second charging circuit (12) for harvesting energy from a negative voltage ($v_{hn}$) of the energy harvester (2) which is applied to the input terminals (4, 5), comprising

--- the electronic switch (13),
--- the coil (L),
--- a second capacitor ($C_n$), and
--- a second blocking element ($D_n$),

-- wherein the coil (L) is connected to the first input terminal (4) and a charging circuit node (K),
-- wherein the electronic switch (13) is connected to the second input terminal (5) and the charging circuit node (K),

- a control device (10) for actuating the electronic switch (13),

-- wherein the control device (10) comprises a control circuit (15) for generating control signals ($g_1, g_2$), and a supply circuit (16) for providing a supply voltage ($v_{cc}$) for the control circuit (15),
-- wherein the control device (10) comprises at least one charge pump (17, 22) to form the supply circuit (16),

**characterized in**

**that** the first capacitor ($C_p$) is connected to the charging circuit node (K) and the first output terminal (7),
**that** the second capacitor ($C_n$) is connected to the charging circuit node (K) and the second output terminal (8),
**that** the first blocking element ($D_p$) is connected to the first input terminal (4) and the first output terminal (7), and
**that** the second blocking element ($D_n$) is connected to the first input terminal (4) and the second output terminal (8),
**that** a charge pump (17) is connected to one of the output terminals (7, 8) and a node $K_0$ between two series-connected electronic switching elements ($Q_1, Q_2$) of the electronic switch (13), wherein the node $K_0$ forms a reference node, which has a reference potential for the control circuit (15) for generating the control signals ($g_1, g_2$),
**that** an auxiliary charge pump (22) is connected to a main charge pump formed by the charge pump (17),
**that** the auxiliary charge pump (22) is connected to the input terminals (4, 5), **that** the main charge pump (17) comprises a series circuit which is made up of a first diode ($D_{cc}$) and a third capacitor ($C_{cc}$),
**that** the auxiliary charge pump (22) is connected to a first node ($k_1$) which is formed between the first diode ($D_{cc}$) and the third capacitor ($C_{cc}$),
**that** the auxiliary charge pump (22) comprises:

- a fourth capacitor ($C_{b1}$) which is connected to the first input terminal (4) and a second node ($k_2$),
- a second diode ($D_{b1}$) which is connected to the second input terminal (5) and the second node ($k_2$),
- a fifth capacitor ($C_{b2}$) which is connected to the second input terminal (5) and a third node ($k_3$),
- a third diode ($D_{b2}$) which is connected to the second node ($k_2$) and the third node ($k_3$), and
- a fourth diode ($D_{b3}$) which is connected to the third node ($k_3$) and the first node ($k_1$).

2. The device as claimed in claim 1, **characterized in that** the electronic switch (13) comprises at least one body diode ($F_1$, $F_2$) which is connected in parallel with a respective electronic switching element ($Q_1$, $Q_2$).

3. The device as claimed in claim 1 or 2, **characterized in that** a first body diode ($F_1$) which is connected in parallel with the first electronic switching element ($Q_1$), and a second body diode ($F_2$) which is connected in parallel with the second electronic switching element ($Q_2$), have opposite blocking directions.

4. The device as claimed in one of claims 1 to 3, **characterized in that** the coil (L), the first capacitor ($C_p$), and the first blocking element ($D_p$) comprise a first loop ($M_{p2}$) for transmitting energy from the coil (L) to the first capacitor ($C_p$).

5. The device as claimed in one of claims 1 to 4, **characterized in that** the coil (L), the second capacitor ($C_n$), and the second blocking element ($D_n$) comprise a second loop ($M_{n2}$) for transmitting energy from the coil (L) to the second capacitor ($C_n$).

6. The device as claimed in one of claims 1 to 5, **characterized in that** the supply circuit (16) comprises an ohmic resistor ($R_b$) which is connected in parallel with the first capacitor ($C_p$).

7. The device as claimed in one of claims 1 to 6, **characterized in that** the control device (10) comprises a first switching sequence if a positive voltage ($v_{hp}$) is applied to the input terminals (4, 5), wherein the following is true for the first switching sequence:

|       | $Z_{1p}$ | $Z_{2p}$ |
|-------|----------|----------|
| $Q_1$ | 1        | 0        |
| $Q_2$ | 1        | 0        |

where

$Q_1$ and $Q_2$ denote two series-connected electronic switching elements of the electronic switch (13),
$Z_{1p}$ and $Z_{2p}$ denote two consecutive switching states of the first switching sequence, and
1 means ON and 0 means OFF.

8. The device as claimed in one of claims 1 to 7, **characterized in that** the control device (10) comprises a second switching sequence if a negative voltage ($v_{hn}$) is applied to the input terminals (4, 5), wherein the following is true for the second switching sequence:

|       | $Z_{1n}$ | $Z_{2n}$ |
|-------|----------|----------|
| $Q_1$ | 1        | 0        |
| $Q_2$ | 1        | 0        |

where

$Q_1$ and $Q_2$ denote two series-connected electronic switching elements of the electronic switch (13),
$Z_{1n}$ and $Z_{2n}$ denote two consecutive switching states of the second switching sequence, and
1 means ON and 0 means OFF.

9. The device as claimed in one of claims 1 to 8, **characterized in that** the control circuit (15) comprises a first comparator (18) for generating a sawtooth voltage ($v_s$) and a second comparator (19) for generating control signals ($g_1$, $g_2$) for the electronic switch (13).

10. The device as claimed in one of claims 1 to 9, **characterized in that** the control circuit (15) is configured in such a way that an input impedance ($Z_{in}$) at the input terminals (4, 5) is adjustable to the energy harvester (2) by means of the generated control signals ($g_1$, $g_2$).

**11.** An energy generator comprising

- a device (3) as claimed in one of claims 1 to 10, and
- an energy harvester (2) which is connected to the input terminals (4, 5) for providing an AC voltage ($v_h$).

**Revendications**

**1.** Dispositif pour la récupération d'énergie électrique comprenant

- un redresseur (9)

-- avec une première borne d'entrée (4) et une deuxième borne d'entrée (5) pour la connexion à un récupérateur d'énergie (2),
-- avec une première borne de sortie (7) et une deuxième borne de sortie (8) pour fournir une tension de sortie ($E_b$),
-- avec un premier circuit de charge (11) pour la récupération d'énergie à partir d'une tension positive ($v_{hp}$) appliquée aux bornes d'entrée (4, 5) du récupérateur d'énergie (2) avec

--- un commutateur électronique (13), le commutateur électronique (13) comprenant un montage en série d'un premier élément de commutation électronique ($Q_1$) et d'un deuxième élément de commutation électronique ($Q_2$),
--- une bobine (L),
--- un premier condensateur ($C_p$), et
--- un premier élément de blocage ($D_p$),

-- avec un deuxième circuit de charge (12) pour la récupération d'énergie à partir d'une tension négative ($v_{hn}$) appliquée aux bornes d'entrée (4, 5) du récupérateur d'énergie (2) avec

--- le commutateur électronique (13),
--- la bobine (L),
--- un deuxième condensateur ($C_n$), et
--- un deuxième élément de blocage ($D_n$),

-- dans lequel la bobine (L) est connectée à la première borne d'entrée (4) et à un noeud de circuit de charge (K), et
-- dans lequel le commutateur électronique (13) est connecté à la deuxième borne d'entrée (5) et au noeud de circuit de charge (K),

- un dispositif de commande (10) pour commander le commutateur électronique (13),

-- dans lequel le dispositif de commande (10) comprend un circuit de commande (15) pour générer des signaux de commande ($g_1$, $g_2$) et un circuit d'alimentation (16) pour fournir une tension d'alimentation ($v_{cc}$) pour le circuit de commande (15),
-- dans lequel le dispositif de commande (10) comprend au moins une pompe de charge (17, 22) pour former le circuit d'alimentation (16),

**caractérisé en ce**

**que** le premier condensateur (Cp) est connecté au noeud de circuit de charge (K) et à la première borne de sortie (7),
**que** le deuxième condensateur (Cn) est connecté au noeud de circuit de charge (K) et à la deuxième borne de sortie (8),
**que** le premier élément de blocage (Dp) est relié à la première borne d'entrée (4) et à la première borne de sortie (7),
**que** le deuxième élément de blocage (Dn) est relié à la première borne d'entrée (4) et à la deuxième borne de sortie (8),
**qu'**une pompe de charge (17) est reliée à l'une des bornes de sortie (7, 8) et à un noeud $K_0$ entre les deux

éléments de commutation électroniques ($Q_1$, $Q_2$) montés en série du commutateur électronique (13), le noeud $K_0$ formant un noeud de référence qui présente un potentiel de référence pour le circuit de commande (15) destiné à générer les signaux de commande ($g_1$, $g_2$),

**qu'**une pompe de charge auxiliaire (22) est reliée à une pompe de charge principale formée par la pompe de charge (17),

**que** la pompe de charge auxiliaire (22) est reliée aux raccords d'entrée (4, 5),

**que** la pompe de charge principale (17) comprend un montage en série d'une première diode ($D_{cc}$) et d'un troisième condensateur ($C_{cc}$),

**que** la pompe de charge auxiliaire (22) est connectée à un premier noeud ($k_1$) formé entre la première diode ($D_{cc}$) et le troisième condensateur ($C_{cc}$),

**que** la pompe de charge auxiliaire (22) comprend

- un quatrième condensateur ($C_{b1}$) connecté à la première borne d'entrée (4) et à un deuxième noeud ($k_2$),
- une deuxième diode ($D_{b1}$) connectée à la deuxième borne d'entrée (5) et au deuxième noeud ($k_2$),
- un cinquième condensateur ($C_{b2}$) connecté à la deuxième borne d'entrée (5) et à un troisième noeud ($k_3$),
- une troisième diode ($D_{b2}$) connectée au deuxième noeud ($k_2$) et au troisième noeud ($k_3$), et
- une quatrième diode ($D_{b3}$) reliée au troisième noeud ($k_3$) et au premier noeud ($k_1$).

2. Dispositif selon la revendication 1, **caractérisé en ce que** le commutateur électronique (13) comprend au moins une diode inverse ($F_1$, $F_2$) qui est montée en parallèle avec l'élément de commutation électronique respectif ($Q_1$, $Q_2$).

3. Dispositif selon la revendication 1 ou 2, **caractérisé en ce qu'**une première diode inverse ($F_1$) montée en parallèle avec le premier élément de commutation électronique ($Q_1$) et une deuxième diode inverse ($F_2$) montée en parallèle avec le deuxième élément de commutation électronique ($Q_2$) ont des directions de blocage opposées.

4. Dispositif selon l'une quelconque des revendications 1 à 3, **caractérisé en ce que** la bobine (L), le premier condensateur ($C_p$) et le premier élément de blocage ($D_p$) forment une première maille ($M_{p2}$) pour le transfert d'énergie de la bobine (L) au premier condensateur ($C_p$).

5. Dispositif selon l'une quelconque des revendications 1 à 4, **caractérisé en ce que** la bobine (L), le deuxième condensateur ($C_n$) et le deuxième élément de blocage ($D_n$) forment une deuxième maille ($M_{n2}$) pour le transfert d'énergie de la bobine (L) vers le deuxième condensateur ($C_n$).

6. Dispositif selon l'une quelconque des revendications 1 à 5, **caractérisé en ce que** le circuit d'alimentation (16) comprend une résistance ohmique ($R_b$) qui est montée en parallèle avec le premier condensateur ($C_p$).

7. Dispositif selon l'une quelconque des revendications 1 à 6, **caractérisé en ce que** le dispositif de commande (10) comprend une première séquence de commutation en cas d'application d'une tension positive ($v_{hp}$) aux bornes d'entrée (4, 5), la première séquence de commutation étant soumise à la règle suivante :

|       | $Z_{1p}$ | $Z_{2p}$ |
|-------|----------|----------|
| $Q_1$ | 1        | 0        |
| $Q_2$ | 1        | 0        |

où

$Q_1$ et $Q_2$ désignent deux éléments de commutation électroniques montés en série du commutateur électronique (13),
$Z_{1p}$ et $Z_{2p}$ désigne deux états de commutation successifs de la première séquence de commutation, et
1 signifie MARCHE et 0 signifie ARRÊT

8. Dispositif selon l'une quelconque des revendications 1 à 7, **caractérisé en ce que** le dispositif de commande (10) comprend une deuxième séquence de commutation en cas d'application d'une tension négative ($v_{hn}$) aux bornes d'entrée (4, 5), la deuxième séquence de commutation étant soumise à la règle suivante :

|  | $Z_{1n}$ | $Z_{2n}$ |
|---|---|---|
| $Q_1$ | 1 | 0 |
| $Q_2$ | 1 | 0 |

où

$Q_1$ et $Q_2$ désignent deux éléments de commutation électroniques montés en série du commutateur électronique (13),
$Z_{1n}$ et $Z_{2n}$ désigne deux états de commutation successifs de la deuxième séquence de commutation, et
1 signifie MARCHE et 0 signifie ARRÊT

9.  Dispositif selon l'une quelconque des revendications 1 à 8, **caractérisé en ce que** le circuit de commande (15) comprend un premier comparateur (18) pour générer une tension en dents de scie ($v_s$) et un deuxième comparateur (19) pour générer des signaux de commande ($g_1$, $g_2$) pour le commutateur électronique (13).

10. Dispositif selon l'une quelconque des revendications 1 à 9, **caractérisé en ce que** le circuit de commande (15) est conçu de telle sorte qu'une impédance d'entrée ($Z_{in}$) aux bornes d'entrée (4, 5) peut être adaptée au générateur d'énergie (2) au moyen des signaux de commande générés ($g_1$, $g_2$).

11. Générateur d'énergie avec

- un dispositif (3) selon l'une quelconque des revendications 1 à 10, et
- un récupérateur d'énergie (2) connecté aux bornes d'entrée (4, 5) pour fournir une tension alternée ($v_h$).

Fig. 1

EP 3 750 235 B1

Fig. 2

Fig. 3

EP 3 750 235 B1

Fig. 4

$Z_{1p} : 0 < t < D \cdot T_S$

$Z_{2p} : D \cdot T_S < t < (1-D) \cdot T_S$

Fig. 5

Fig. 6

$Z_{1n} : 0 < t < D \cdot T_S$

$Z_{2n} : D \cdot T_S < t < (1-D) \cdot T_S$

Fig. 7

Fig. 8

Fig. 9

EP 3 750 235 B1

Fig. 10

EP 3 750 235 B1

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018201925
- WO 2013050619 A1
- US 20150035512 A1
- US 20170271904 A1

**In der Beschreibung aufgeführte Nicht-Patentliteratur**

- Design and Implementation of a Direct AC-DC Boost Converter for Low-Voltage Energy Harvesting. IEEE TRANSACTIONS ON INDUSTRIAL ELECTRONICS. IEEE SERVICE CENTER, 01. Juni 2011, vol. 58, 2387-2396
- A simple Bi-directional bridgeless AC/DC buck-boost converter for automotive energy harvesting. IECON 2014 - 40th ANNUAL CONFERENCE OF THE IEEE IINDUSTRIAL ELECTRONICS SOCIETY. IEEE, 29. Oktober 2014, 1937-1943
- High Efficiency Boost Rectifier (Bridgeless) For Energy Harvesting. INTERNATIONAL JOURNAL OF ADVANCED RESEARCH IN ELECTRICAL ELECTRONICS AND INSTRUMENTATION ENGINEERING. 20. Oktober 2014, vol. 03, 12888-12295
- A Bridgeless Boost Rectifier for Low-Voltage Energy Harvesting Applications. IEEE TRANSACTIONS ON POWER ELECTRONICS. INSTITUTE OF ELECTRICAL AND ELECTONRICS ENGINEERS, 01. November 2013, vol. 28, 5206-5214